# EUROPEAN PATENT APPLICATION

(11) **EP 4 531 452 A1**
(43) Date of publication of application: **02.04.2025**
(21) Application number: 23824092.3
(22) Date of filing: 08.05.2023
(51) Int. Cl.: H04W 28/04, H04W 4/80, H04W 84/18, H04W 88/02, H04L 47/32

(54) **ELECTRONIC DEVICE FOR PROVIDING AUDIO SERVICE AND OPERATION METHOD THEREOF**

(30) Priority: 13.06.2022 KR 20220071470; 26.08.2022 KR 20220107441
(71) Applicant: Samsung Electronics Co., Ltd., Suwon-si, Gyeonggi-do 16677 (KR)
(72) Inventor: YOO, Hyungseoung, Suwon-si, Gyeonggi-do 16677 (KR); CHEONG, Gupil, Suwon-si, Gyeonggi-do 16677 (KR); KANG, Doosuk, Suwon-si, Gyeonggi-do 16677 (KR)
(74) Representative: HGF
(86) International application number: PCT/KR2023/006221
(87) International publication number: WO 2023/243866

(57) **Abstract**

According to an embodiment, an electronic device may comprise a communication circuit and at least one processor operatively connected to the communication circuit, wherein the at least one processor may be configured to: configure a communication link with at least one external electronic device via the communication circuit; identify the quality of the communication link; on the basis that the quality of the communication link is lower than a threshold quality, discard at least one of packets to be transmitted for a configured time interval in the communication link; and transmit a packet indicating the at least one packet being discarded to the at least one external electronic device via the communication circuit. Other embodiments may be possible.

## Description

### [Technical Field]

The disclosure relates to an electronic device providing an audio service and an operating method thereof.

### [Background Art]

Recently, with the development of an information communication technology, various wireless communication technologies and various services have been developed. In particular, a Bluetooth scheme which is one of short-range communication schemes has been actively used, and electronic devices using the Bluetooth scheme have been also widely used. In particular, a pair of ear buds which may be respectively worn on both ears of a user have been widely used as an ear-wearable device. The ear-wearable device may provide various functions. For example, the ear-wearable device may use a microphone to input and identify a user's voice, transmit audio data related to the user's voice to an electronic device (e.g., a smart phone), and use a speaker to output audio data received from the electronic device.

The Bluetooth scheme may include a Bluetooth legacy (or Bluetooth classic) scheme and/or a Bluetooth low energy (BLE) scheme. Each of electronic devices (e.g., a first electronic device (e.g., a left earbud) and a second electronic device (e.g., a right earbud)) providing a low energy audio (LE Audio) service based on a BLE scheme may independently establish a communication link (e.g., a connected isochronous stream (CIS) connection) with an external electronic device (e.g., a smartphone) and transmit and receive data with the external electronic device via the established communication link.

If a first electronic device, a second electronic device, and an external electronic device which are connected based on the BLE scheme provide an audio service such as music play, each of the first electronic device and the second electronic device may operate as an audio sink device, and the external electronic device may operate as an audio source device. For example, the first electronic device may perform a role of a first audio channel (e.g., a left audio channel), and the second electronic device may perform a role of a second audio channel (e.g., a right audio channel). Each of the first electronic device and the second electronic device may transmit, to the external electronic device, a device capability identifier (ID) (e.g., a CIS ID) related to an audio channel role performed by each of the first electronic device and the second electronic device, at a set time point. For example, the set time point may be a time point at which each of the first electronic device and the second electronic device is connected to the external electronic device, or a time point at which a service (e.g., an audio service) is started. The external electronic device may identify the audio channel role performed by each of the first electronic device and the second electronic device based on the device capability ID received from each of the first electronic device and the second electronic device, and may transmit and receive audio data with each of the first electronic device and the second electronic device based on the identified audio channel role.

While the first electronic device, the second electronic device, and the external electronic device are providing the audio service based on the BLE scheme, it may become impossible to provide a normal audio service due to a change in a radio frequency (RF) environment. For example, the RF environment may affect quality of each of a first communication link (e.g., a CIS connection) between the external electronic device which is an audio source device and the first electronic device which is an audio sink device, a second communication link which is a communication link between the external electronic device and the second electronic device which is another audio sink device, or a third communication link which is a communication link between the first electronic device and the second electronic device. If quality of at least one of the first communication link, the second communication link, or the third communication link becomes lower than threshold quality due to a change in the RF environment, normal transmission and reception of audio data via a communication link having quality lower than the threshold quality may be impossible. For example, since the normal transmission and reception of the audio data may be impossible via the communication link having the quality lower than the threshold quality, various cases such as a case where sound breakage occurs, a case where sound distortion occurs, a case where loud noise occurs, and/or a case where silence occurs may occur, so service quality degradation may occur due to this.

Therefore, there is a need for a scheme by which the first electronic device, the second electronic device, and the external electronic device may stably provide a high-quality audio service even though quality of any one of communication links among the first electronic device, the second electronic device, or the external electronic device becomes lower than the threshold quality.

### [Disclosure]

### [Technical Solution]

An embodiment of the disclosure may provide an electronic device which provides an audio service and an operating method thereof.

An embodiment of the disclosure may provide an electronic device for performing a packet drop operation on a communication link whose quality is less than threshold quality if the quality of at least one communication link among communication links between electronic devices providing an audio service is less than the threshold quality, and an operating method thereof.

An embodiment of the disclosure may provide an electronic device for performing a flush point-adjustment operation on a communication link whose quality is less than threshold quality if the quality of at least one communication link among communication links between electronic devices providing an audio service is less than the threshold quality, and an operating method thereof.

An electronic device according to an embodiment may include a communication circuit and at least one processor operably connected to the communication circuit.

According to an embodiment, the at least one processor may be configured to establish, via the communication circuit, a communication link with at least one external electronic device.

According to an embodiment, the at least one processor may be further configured to identify quality of the communication link.

According to an embodiment, the at least one processor may be further configured to, based on the quality of the communication link being less than threshold quality, discard at least one of packets to be transmitted during a set time period on the communication link.

According to an embodiment, the at least one processor may be further configured to transmit, to the at least one external electronic device, via the communication circuit, a packet indicating that the at least one packet is discarded.

An electronic device according to an embodiment may include a communication circuit and at least one processor operably connected to the communication circuit.

According to an embodiment, the at least one processor may be further configured to establish, via the communication circuit, a communication link with an external electronic device.

According to an embodiment, the at least one processor may be further configured to, receive, from the external electronic device via the communication circuit, at least one packet during a set time period via the communication link.

According to an embodiment, the at least one processor may be further configured to identify whether a packet indicating that the packet is discarded is included in the received at least one packet.

According to an embodiment, the at least one processor may be further configured to, based on the packet indicating that the packet is discarded being included in the received at least one packet, perform a recovery operation on a packet corresponding to the packet indicating that the packet is discarded.

An operating method of an electronic device according to an embodiment may include establishing a communication link with at least one external electronic device.

According to an embodiment, the operating method may further include identifying quality of the communication link.

According to an embodiment, the operating method may further include, based on the quality of the communication link being less than threshold quality, discarding at least one of packets to be transmitted during a set time period on the communication link.

According to an embodiment, the operating method may further include, transmitting, to the at least one external electronic device, a packet indicating that the at least one packet is discarded.

An operating method of an electronic device according to an embodiment may include establishing a communication link with an external electronic device.

According to an embodiment, the operating method may further include receiving, from the external electronic device, at least one packet during a set time period via the communication link.

According to an embodiment, the operating method may further include identifying whether a packet indicating that the packet is discarded is included in the received at least one packet.

According to an embodiment, the operating method may further include, based on the packet indicating that the packet is discarded being included in the received at least one packet, performing a recovery operation on a packet corresponding to the packet indicating that the packet is discarded.

According to an embodiment, a non-transitory computer-readable storage medium may include one or more programs including instructions, when executed by at least one processor of an electronic device, configured to cause the electronic device to establish a communication link with at least one external electronic device.

According to an embodiment of the disclosure, the instructions may be further configured to cause the electronic device to identify quality of the communication link.

According to an embodiment of the disclosure, the instructions may be further configured to cause the electronic device to, based on the quality of the communication link being less than threshold quality, discard at least one of packets to be transmitted during a set time period on the communication link.

According to an embodiment of the disclosure, the instructions may be further configured to cause the electronic device to transmit, to the at least one external electronic device, a packet indicating that the at least one packet is discarded.

According to an embodiment, a non-transitory computer-readable storage medium may include one or more programs including instructions, when executed by at least one processor of an electronic device, configured to cause the electronic device to establish a communication link with an external electronic device.

According to an embodiment of the disclosure, the instructions may be further configured to cause the electronic device to receive, from the external electronic device, at least one packet during a set time period in the communication link.

According to an embodiment of the disclosure, the instructions may be further configured to cause the electronic device to identify whether a packet indicating that the packet is discarded is included in the received at least one packet.

According to an embodiment of the disclosure, the instructions may be further configured to cause the electronic device to, based on the packet indicating that the packet is discarded being included in the received at least one packet, perform a recovery operation on a packet corresponding to the packet indicating that the packet is discarded.

### [Description of Drawings]

FIG. 1 is a block diagram schematically illustrating an electronic device within a network environment according to an embodiment.
FIG. 2 is a diagram schematically illustrating an example of connections between electronic devices which are based on a Bluetooth scheme in a wireless communication network according to an embodiment.
FIG. 3 is a block diagram illustrating an external electronic device in a wireless communication network according to an embodiment.
FIG. 4 is a block diagram illustrating a first electronic device in a wireless communication network according to an embodiment.
FIG. 5 is a diagram illustrating configuration of CIG events and CIS events in a wireless communication network according to an embodiment.
FIG. 6 is a diagram illustrating configuration of BIG events and BIS events in a wireless communication network according to an embodiment.
FIG. 7 is a diagram illustrating an example of transmissions of audio packets in a wireless communication network according to an embodiment.
FIG. 8 is a flowchart illustrating an example of an operating process of an external electronic device in a wireless communication network according to an embodiment.
FIG. 9 is a flowchart illustrating an example of an operating process of a first electronic device in a wireless communication network according to an embodiment.
FIGS. 10a and 10b are diagrams illustrating another example of transmissions of audio packets in a wireless communication network according to an embodiment.
FIG. 11 is a diagram illustrating still another example of transmissions of audio packets in a wireless communication network according to an embodiment.
FIGS. 12a and 12b are diagrams illustrating still another example of transmissions of audio packets in a wireless communication network according to an embodiment.
FIG. 13 is a flowchart illustrating another example of an operating process of an external electronic device in a wireless communication network according to an embodiment.
FIGS. 14a and 14b are diagrams illustrating still another example of transmissions of audio packets in a wireless communication network according to an embodiment.
FIG. 15a is a diagram illustrating an example of an operation for identifying quality of a communication link in a wireless communication network according to an embodiment.
FIG. 15b is a diagram illustrating another example of an operation for identifying quality of a communication link in a wireless communication network according to an embodiment.
FIG. 16 is a flowchart illustrating another example of an operating process of an external electronic device in a wireless communication network according to an embodiment.
FIG. 17 is a diagram illustrating a graph showing quality of a communication link in a wireless communication network according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe specific embodiments, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an embodiment of the disclosure will describe an electronic device, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

In a detailed description of an embodiment of the disclosure, a standard specified by Bluetooth special interest group (SIG) is referred to, but the main subject of the disclosure can be somewhat modified and applied to other communication systems having a similar technical background without departing from the scope of the disclosure, and the modifications can be made on the basis of determination of those skilled in the art.

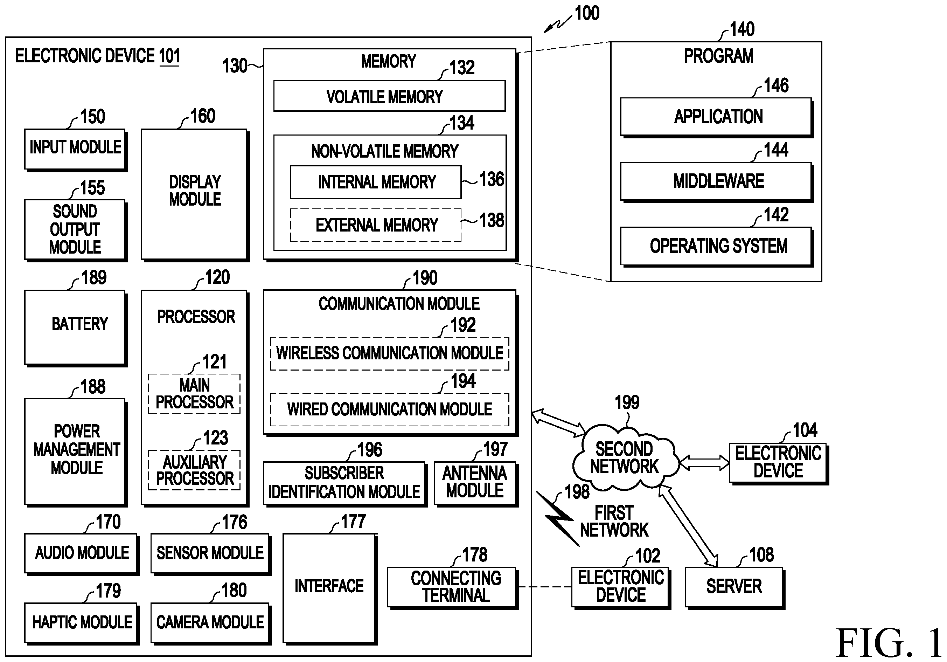

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. **In** such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

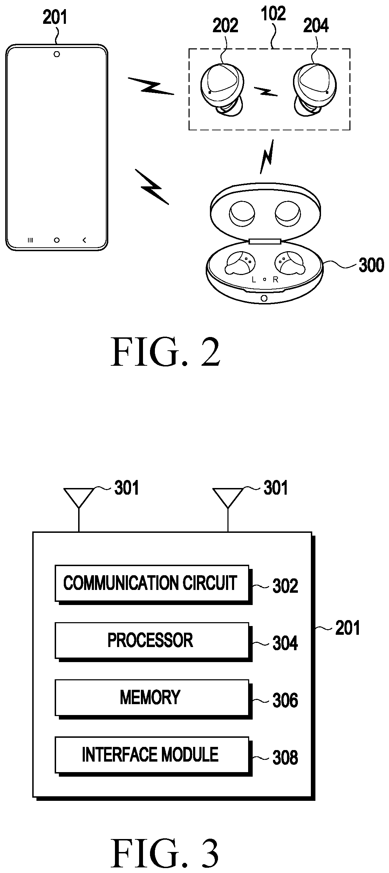

FIG. 2 is a diagram schematically illustrating an example of connections between electronic devices which are based on a Bluetooth scheme in a wireless communication network according to an embodiment.

Referring to FIG. 2, an external electronic device 201 (e.g., an electronic device 101 in FIG. 1) may be connected wirelessly to an ear-wearable device 102 (e.g., an electronic device 102 in FIG. 1). In an embodiment, the external electronic device 201 may be a smart phone. The ear-wearable device 102 may include a first earbud 202 (e.g., a left earbud) and a second earbud 204 (e.g., a right earbud). In an embodiment, if the first electronic device 202, the second electronic device 204, and the external electronic device 201 connected based on the Bluetooth scheme provide an audio service such as music play, each of the first electronic device 202 and the second electronic device 204 may operate as an audio sink device, and the external electronic device 201 may operate as an audio source device. For example, the first electronic device 202 may perform a first audio channel (e.g., left audio channel) role, and the second electronic device 204 may perform a second audio channel (e.g., right audio channel) role.

In an embodiment, it is assumed that the first electronic device 202 and the second electronic device 204 are included in the ear-wearable device 102, but the first electronic device 202 and the second electronic device 204 may be included in any electronic device as long as the first electronic device 202 and the second electronic device 204 may operate as a pair as well as the ear-wearable device 102. According to an embodiment, the first electronic device 202 and the second electronic device 204 may be implemented to include the same or similar components.

According to an embodiment, the external electronic device 201 and the first electronic device 202 and the second electronic device 204 may establish a connection (e.g., a communication link) with one another and transmit and/or receive data (e.g., audio data) to and from one another. For example, the electronic device 101 and each of the first electronic device 202 and the second electronic device 204 may establish a communication link based on at least one of a Wi-Fi scheme or a Bluetooth scheme, however, a scheme for establishing the communication link in the electronic device 101 and each of the first electronic device 202 and the second electronic device 204 is not limited to at least one of the Wi-Fi scheme and/or the Bluetooth scheme. For example, if the scheme of establishing a communication link in the external electronic device 201 and the first electronic device 202 and the second electronic device 204 is the Bluetooth scheme, the communication link may be a connected isochronous stream (CIS) connection.

In an embodiment, the external electronic device 201 may establish a communication link with only one of the first electronic device 202 and the second electronic device 204 or may establish a communication link with each of the first electronic device 202 and the second electronic device 204. For example, a communication link established between the external electronic device 201 and the first electronic device 202 may be a first communication link, and a communication link established between the external electronic device 201 and the second electronic device 204 may be a second communication link.

In an embodiment, the first electronic device 202 and the second electronic device 204 may establish a communication link based on at least one of the Wi-Fi scheme or the Bluetooth scheme, however, a scheme for establishing the communication link in the first electronic device 202 and the second electronic device 204 is not limited to at least one of the Wi-Fi scheme or the Bluetooth scheme. For example, if the scheme of establishing the communication link between the first electronic device 202 and the second electronic device 204 is the Bluetooth scheme, the communication link may be the CIS connection. For example, the communication link established between the first electronic device 202 and the second electronic device 204 may be the second communication link.

In an embodiment, one of the first electronic device 202 and the second electronic device 204 may be a central device (or a master device, a primary device, or a main device), and the other one may operate as a peripheral device (or a slave device, a secondary device, or a sub device). An electronic device operating as a central device may transmit data to an electronic device operating as a peripheral device. For example, when the first electronic device 202 and the second electronic device 204 establish a communication link with each other, one of the first electronic device 202 and the second electronic device 204 may be selected as a central device, and the other one may be selected as a peripheral device.

The first electronic device 202 and/or the second electronic device 204 may communicate directly or indirectly with a third electronic device 300. In an embodiment, the third electronic device 300 may be an ear buds case device or a cradle device which stores and charges the first electronic device 202 and/or the second electronic device 204, and for convenience of description, it will be assumed that the third electronic device 300 is the ear buds case device.

FIG. 3 is a block diagram illustrating an external electronic device in a wireless communication network according to an embodiment.

Referring to FIG. 3, an external electronic device 201 (e.g., an electronic device 101 in FIG. 1 or an external electronic device 201 in FIG. 2) may be a device implementing a Bluetooth scheme (e.g., a Bluetooth low energy (BLE) scheme). The external electronic device 201 may include a communication circuit 302 (e.g., a communication module 190) which transmits and receives signals with another electronic device (e.g., an electronic device 102 or an electronic device 104 in FIG. 1), for example, a peer device by using one or more antennas 301. In an embodiment, the other electronic device may include at least one of a first electronic device 202 or a second electronic device 204.

The external electronic device 201 may include a processor 304 (e.g., a processor 120 in FIG. 1) which may be implemented in one or more single-core processors or one or more multi-core processors, and a memory 306 (e.g., a memory 130 in FIG. 1) which stores instructions for an operation of the external electronic device 201.

The external electronic device 201 may include an interface module 308 (e.g., an interface 177 in FIG. 1) which provides a wired and/or wireless interface for communicating with components outside a network. For example, at least a portion of the one or more antennas 301, the communication circuit 302, or the interface module 308 may be implemented as at least a portion of the communication module 190 and the antenna module 198 in FIG. 1.

According to an embodiment, the external electronic device 201 may include a plurality of communication circuits, one of the plurality of communication circuits may be a communication circuit which is based on a Wi-Fi scheme, and another of the plurality of communication circuits may be a communication circuit which is based on a Bluetooth scheme, e.g., a BLE scheme. According to an embodiment, the plurality of communication circuits may include a communication circuit 302, and the communication circuit 302 may be a communication circuit which is based on the Wi-Fi scheme or a communication circuit which is based on the BLE scheme.

According to an embodiment, the external electronic device 201 does not separately include a communication circuit which is based on the Wi-Fi scheme and a communication circuit which is based on the BLE scheme, and may include one communication circuit capable of supporting both the Wi-Fi scheme and the BLE scheme. According to an embodiment, the one communication circuit capable of supporting both the Wi-Fi scheme and the BLE scheme may be the communication circuit 302.

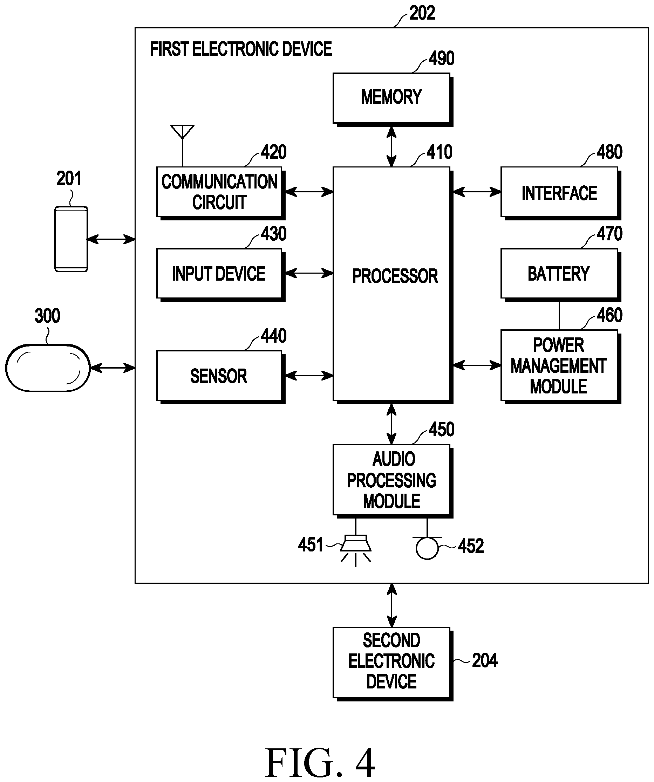

FIG. 4 is a block diagram illustrating a first electronic device in a wireless communication network according to an embodiment.

Referring to FIG. 4, an external electronic device 201 (e.g., an electronic device 101 in FIG. 1 or an external electronic device 201 in FIG. 2 or FIG. 3) may be connected wirelessly to a ear wearable device (e.g., an electronic device 102 in FIG. 1). In an embodiment, the external electronic device 201 may be a smart phone, and the wearable device may include at least one of a first electronic device 202 (e.g., a left earbud) or a second electronic device 204 (e.g., a right earbud).

In FIG. 4, it is described that each of the first electronic device 202 and the second electronic device 204 is implemented as an earbud, but the first electronic device 202 and the second electronic device 204 may be implemented as various types of devices (e.g., a smart watch, a head-mounted display device, and devices for measuring a biometric signal (e.g., an electrocardiogram patch)) which may include at least one electrode and sensor device to be described below. According to an embodiment, if each of the first electronic device 202 and the second electronic device 204 is implemented as the earbud, the first electronic device 202 and the second electronic device 204 may compose a pair. According to an embodiment, the first electronic device 202 and the second electronic device 204 may be implemented to include the same or similar components.

According to an embodiment, the external electronic device 201, the first electronic device 202, and the second electronic device 204 may establish a connection (e.g., a communication link) with one another and transmit and/or receive data to and from one another. For example, the external electronic device 201 and each of the first electronic device 202 and the second electronic device 204 may establish a communication link using at least one of a Wi-Fi scheme or a Bluetooth scheme, however, a scheme for establishing the communication link in the external electronic device 201 and each of the first electronic device 202 and the second electronic device 204 is not limited to at least one of the Wi-Fi scheme or the Bluetooth scheme.

In an embodiment, the external electronic device 201 may connect a communication link to only one (e.g., a central earbud) of the first electronic device 202 and the second electronic device 204 or may connect communication links with both the first electronic device 202 and the second electronic device 204.

In an embodiment, the first electronic device 202 and the second electronic device 204 may establish a communication link based on at least one of the Wi-Fi scheme or the Bluetooth scheme, however, a scheme for establishing the communication link in the first electronic device 202 and the second electronic device 204 is not limited to at least one of the Wi-Fi scheme or the Bluetooth scheme.

In an embodiment, the first electronic device 202 may include the same or similar components to at least one of the components (e.g., modules) of the external electronic device (e.g., an electronic device 101 in FIG. 1). The first electronic device 202 may include a communication circuit 420 (e.g., a communication module 190 in FIG. 1), an input device 430 (e.g., an input module 150 in FIG. 1), a sensor 440 (e.g., a sensor module 176 in FIG. 1), an audio processing module 450 (e.g., an audio module 170 in FIG. 1), a memory 490 (e.g., a memory 130 in FIG. 1), a power management module 460 (e.g., a power management module 188 in FIG. 1), a battery 470 (e.g., a battery 189 in FIG. 1), an interface 480 (e.g., an interface 177 in FIG. 1), and a processor 410 (e.g., a processor 120 in FIG. 1).

According to an embodiment, the communication circuit 420 may include at least one of a wireless communication module (e.g., a Bluetooth communication module, a cellular communication module, a wireless-fidelity (Wi-Fi) communication module, a near-field communication (NFC) communication module, or a GNSS communication module) or a wired communication module (e.g., a LAN communication module or a power line communication (PLC) communication module).

The communication circuit 420 may directly or indirectly communicate with at least one of the external electronic device 201, the third electronic device 300, or the second electronic device 204 through a first network (e.g., a first network 198 in FIG. 1), using at least one communication module. The second electronic device 204 may compose a pair with the first electronic device 202. The communication module 420 may include one or more communication processors which are operable independently from the processor 410 and supports wired or wireless communication.

According to an embodiment, the communication circuit 420 may be connected to one or a plurality of antennas for transmitting signals or information to another electronic device (e.g., the external electronic device 201, the second electronic device 204, or the third electronic device 300) or receiving signals or information from the other electronic device. According to an embodiment, at least one antenna appropriate for a communication scheme used in a communication network, such as the first network (e.g., the first network 198 of FIG. 1) or the second network (e.g., the second network 199 of FIG. 2), may be selected from the plurality of antennas by the communication circuit 420. The signal or information may then be transmitted or received between the communication circuit 420 and another electronic device via the selected at least one antenna.

According to an embodiment, the input device 430 may be configured to generate various input signals that may be used for operation of the first electronic device 202. The input device 430 may include at least one of a touch pad, a touch panel, or a button.

According to an embodiment, the input device 430 may generate a user input related to the turn-on or turn-off of the first electronic device 202. According to an embodiment, the input device 430 may receive a user input for establishing a communication link between the first electronic device 202 and the second electronic device 204. According to an embodiment, the input device 430 may receive a user input related to audio data (or audio content). For example, the user input may be associated with functions of starting playback of audio data, pausing playback, stopping playback, adjusting playback speed, adjusting playback volume, or muting.

According to an embodiment, the sensor 440 may obtain a location or an operation state of the first electronic device 202. The sensor 440 may convert an obtained signal into an electric signal. For example, the sensor 440 may include at least one of a magnetic sensor, an acceleration sensor, a gyro sensor, a geomagnetic sensor, a proximity sensor, a gesture sensor, a grip sensor, a biometric sensor, and/or an optical sensor.

According to an embodiment, the processor 410 may obtain data (e.g., audio data) from a packet (e.g., an audio packet) received from the external electronic device 201, and process the obtained data via the audio processing module 450 to output the processed data to the speaker 454. The audio processing module 450 may support an audio data gathering function and reproduce the gathered audio data.

According to an embodiment, the audio processing module 450 may include an audio decoder (not shown) and a D/A converter (not shown). The audio decoder may convert audio data stored in the memory 490 or received from the external electronic device 201 via communication circuit 420 into a digital audio signal. The D/A converter may convert the digital audio signal converted by the audio decoder into an analog audio signal. According to an embodiment, the audio decoder may convert audio data received from the external electronic device 201 via the communication circuit 420 and stored in the memory 490 into a digital audio signal. The speaker 454 may output the analog audio signal converted by the D/A converter.

According to an embodiment, the audio processing module 450 may include an A/D converter (not shown). The A/D converter may convert the analog audio signal transferred via a microphone 452 into a digital voice signal. The microphone 452 may include at least one air conduction microphone and/or at least one bone conduction microphone for obtaining voice and/or sound.

According to an embodiment, the audio processing module 450 may play various audio data set in the operation of the first electronic device 202. For example, the processor 410 may be designed to identify insertion or removal of the first electronic device 202 into/from the user's ear via the sensor 440 and reproduce audio data regarding an effect sound or guide sound via the audio processing module 450. The output of the sound effect or guide sound may be omitted according to the user setting or the designer's intention.

According to an embodiment, the memory 490 may store various data used by at least one component (e.g., the processor 410 or the sensor 440) of the first electronic device 402. For example, data may include software and input data or output data for an instruction related thereto. The memory 490 may include a volatile memory or a non-volatile memory.

According to an embodiment, the power management module 460 may manage power supplied to the first electronic device 402. According to one embodiment, the power management module 460 may be implemented as at least part of a power management integrated circuit (PMIC). According to an embodiment, the power management module 460 may include a battery charging module. According to an embodiment, if another electronic device (e.g., one of the external electronic device 201, the second electronic device 204, and/or the third external electronic device 300) is electrically (wirelessly or wiredly) connected to the first electronic device 202, the power management module 460 may receive power from the other electronic device to charge the battery 470.

According to an embodiment, the battery 470 may supply power to at least one component of the first electronic device 202. According to an embodiment, the battery 470 may include a rechargeable battery. According to an embodiment, if the first electronic device 202 is mounted in the third electronic device 300, the first electronic device 202 may charge the battery 470 to a designated charge level and then power on the first electronic device 202 or turn on at least part of the communication circuit 420.

According to an embodiment, the interface 480 may support one or more designated protocols which may be used for the first electronic device 402 to directly (e.g., wiredly) connect to the external electronic device 201, the third electronic device 300, the second electronic device 204, or another electronic device. According to an embodiment, the interface 480 may include at least one of a high definition multimedia interface (HDMI), a USB interface, an SD card interface, a power line communication (PLC) interface, or an audio interface. According to an embodiment, the interface 480 may include at least one connection port for establishing a physical connection with the third electronic device 300.

According to an embodiment, the processor 410 may execute software to control at least one other component (e.g., a hardware or software component) of the first electronic device 202 connected with the processor 410 and may process or compute various data. According to an embodiment, as at least part of the data processing or computation, the processor 410 may load an instruction or data received from another component (e.g., the sensor 440 or communication circuit 420) onto a volatile memory 490, process the instruction or the data stored in the volatile memory 490, and store resulting data in a non-volatile memory.

According to an embodiment, the processor 410 may establish a communication link with the external electronic device 201 via the communication circuit 420 and receive data (e.g., audio data) from the external electronic device 201 through the established communication link. According to an embodiment, the processor 410 may transmit the data, received from the electronic device 101 via the communication circuit 420, to the second electronic device 204. According to an embodiment, the processor 410 may perform operations of the first electronic device 202 which are to be described below.

According to an embodiment, the first electronic device 202 may further include various modules depending on the form in which it is provided. There are many variations according to the convergence trend of digital devices, so it is not possible to list them all, but components equivalent to the above-mentioned components may be further included in the first electronic device 202. Further, it is apparent that in the first electronic device 202 according to an embodiment, specific components may be excluded from the components described in FIG. 4 or the specific components may be replaced with other components according to the form in which it is provided.

According to an embodiment, the second electronic device 204 configured in pair with the first electronic device 202 may include the same or substantially similar components to those included in the first electronic device 202 and may perform all or some of operations of the first electronic device 202 to be described below.

According to an embodiment, an electronic device (e.g., an electronic device 101 in FIG. 1, or an external electronic device 201 in FIG. 2, FIG. 3, or FIG. 4) may include a communication circuit (e.g., a communication module 190 in FIG. 1 or a communication circuit 302 in FIG. 3), and at least one processor (e.g., a processor 120 in FIG. 1 or a processor 304 in FIG. 3) operably connected with the communication circuit (e.g., the communication module 190 in FIG. 1 or the communication circuit 302 in FIG. 3).

According to an embodiment, the at least one processor (e.g., the processor 120 in FIG. 1 or the processor 304 in FIG. 3) may be configured to establish, via the communication circuit (e.g., the communication module 190 in FIG. 1 or the communication circuit 302 in FIG. 3), a communication link with at least one external electronic device (e.g., a first electronic device 202 in FIG. 2 or FIG. 4, or a second electronic device 204 in FIG. 2 or FIG. 4).

According to an embodiment, the at least one processor (e.g., the processor 120 in FIG. 1 or the processor 304 in FIG. 3) may be further configured to identify quality of the communication link.

According to an embodiment, the at least one processor (e.g., the processor 120 in FIG. 1 or the processor 304 in FIG. 3) may be further configured to, based on the quality of the communication link being less than threshold quality, discard at least one of packets to be transmitted during a set time period on the communication link.

According to an embodiment, the at least one processor (e.g., the processor 120 in FIG. 1 or the processor 304 in FIG. 3) may be further configured to transmit, to the at least one external electronic device (e.g., the first electronic device 202 in FIG. 2 or FIG. 4, or the second electronic device 204 in FIG. 2 or FIG. 4), via the communication circuit (e.g., the communication module 190 in FIG. 1 or the communication circuit 302 in FIG. 3), a packet indicating that the at least one packet is discarded.

According to an embodiment, the at least one processor (e.g., the processor 120 in FIG. 1 or the processor 304 in FIG. 3) may be further configured to, based on the quality of the communication link being less than the threshold quality, adjust flush points which are time points at which the packets to be transmitted during the set time period are set to be discarded.

According to an embodiment, the at least one processor (e.g., the processor 120 in FIG. 1 or the processor 304 in FIG. 3) may be configured to discard the at least one packet at a time point preceding a flush point, which is a time point at which the at least one packet is set to be discarded, in a time domain.

According to an embodiment, the at least one processor (e.g., the processor 120 in FIG. 1 or the processor 304 in FIG. 3) may be configured to transmit, to the at least one external electronic device (e.g., the first electronic device 202 in FIG. 2 or FIG. 4, or the second electronic device 204 in FIG. 2 or FIG. 4), via the communication circuit (e.g., the communication module 190 in FIG. 1 or the communication circuit 302 in FIG. 3), packets during another set time period preceding the set time period in a time domain.

According to an embodiment, the at least one processor (e.g., the processor 120 in FIG. 1 or the processor 304 in FIG. 3) may be configured to receive, from the at least one external electronic device (e.g., the first electronic device 202 in FIG. 2 or FIG. 4, or the second electronic device 204 in FIG. 2 or FIG. 4), via the communication circuit (e.g., the communication module 190 in FIG. 1 or the communication circuit 302 in FIG. 3), during the other set time period, at least one response packet for the packets transmitted during the other set time period.

According to an embodiment, the at least one processor (e.g., the processor 120 in FIG. 1 or the processor 304 in FIG. 3) may be configured to, based on the at least one response packet, identify the quality of the communication link.

According to an embodiment, the at least one processor (e.g., the processor 120 in FIG. 1 or the processor 304 in FIG. 3) may be configured to, based on a maximum number of sub-events included in each connected isochronous stream (CIS) event included in the set time period and a number of new data packets which may be transmitted within a time interval in which a CIS event occurs, adjust the flush points for the packets to be transmitted during the set time period.

According to an embodiment, each CIS event may include an opportunity for the electronic device (e.g., the electronic device 101 in FIG. 1, or the external electronic device 201 in FIG. 2, FIG. 3, or FIG. 4) and the at least one external electronic device (e.g., the first electronic device 202 in FIG. 2 or FIG. 4, or the second electronic device 204 in FIG. 2 or FIG. 4) to exchange a packet.

According to an embodiment, each of the sub-events may be used for the electronic device (e.g., the electronic device 101 in FIG. 1, or the external electronic device 201 in FIG. 2, FIG. 3, or FIG. 4) to transmit a packet and for the at least one external electronic device (e.g., the first electronic device 202 in FIG. 2 or FIG. 4, or the second electronic device 204 in FIG. 2 or FIG. 4) to respond to the electronic device (e.g., the electronic device 101 in FIG. 1, or the external electronic device 201 in FIG. 2, FIG. 3, or FIG. 4).

According to an embodiment, the at least one processor (e.g., the processor 120 in FIG. 1 or the processor 304 in FIG. 3) may be configured to, based on a set discard ratio, discard at least one of the packets to be transmitted during the set time period.

According to an embodiment, the set discard ratio includes a ratio of a number of acknowledgement (ACK) packets continuously received for a set number of packets among the packets to be transmitted during the set time period to a packet indicating that the at least one packet is discarded.

According to an embodiment, the at least one processor (e.g., the processor 120 in FIG. 1 or the processor 304 in FIG. 3) may be further configured to transmit, to the at least one external electronic device (e.g., the first electronic device 202 in FIG. 2 or FIG. 4, or the second electronic device 204 in FIG. 2 or FIG. 4), via the communication circuit (e.g., the communication module 190 in FIG. 1 or the communication circuit 302 in FIG. 3), a packet including information associated with the adjusted flush points.

According to an embodiment, the packet indicating that the at least one packet is discarded may be an empty packet, a null packet, or a special packet.

According to an embodiment, an electronic device (e.g., a first electronic device 202 in FIG. 2 or FIG. 4, or a second electronic device 204 in FIG. 2 or FIG. 4) may include a communication circuit (e.g., a communication circuit 420 in FIG. 4), and at least one processor (e.g., a processor 410 in FIG. 4) operably connected with the communication circuit (e.g., the communication circuit 420 in FIG. 4).

According to an embodiment, the at least one processor (e.g., the processor 410 in FIG. 4) may be configured to establish, via the communication circuit (e.g., the communication circuit 420 in FIG. 4), a communication link with an external electronic device (e.g., an electronic device 101 in FIG. 1, or an external electronic device 201 in FIG. 1, FIG. 2, or FIG. 4).

According to an embodiment, the at least one processor (e.g., the processor 410 in FIG. 4) may be further configured to receive, from the external electronic device (e.g., the electronic device 101 in FIG. 1, or the external electronic device 201 in FIG. 1, FIG. 2, or FIG. 4), via the communication circuit (e.g., the communication circuit 420 in FIG. 4), at least one packet during a set time period in the communication link.

According to an embodiment, the at least one processor (e.g., the processor 410 in FIG. 4) may be further configured to identify whether a packet indicating that the packet is discarded is included in the received at least one packet.

According to an embodiment, the at least one processor (e.g., the processor 410 in FIG. 4) may be further configured to, based on the packet indicating that the packet is discarded being included in the received at least one packet, perform a recovery operation on a packet corresponding to the packet indicating that the packet is discarded.

According to an embodiment, the at least one packet may be discarded at a time point preceding a flush point, which is a time point at which the at least one packet is set to be discarded, in a time domain.

According to an embodiment, the at least one packet may be included in the packets transmitted during the set time period, and the at least one packet may be discarded during the set time period based on a set discard ratio.

According to an embodiment, the set discard ratio may include a ratio of a number of acknowledgement (ACK) packets continuously received for a set number of packets among the packets transmitted by the external electronic device (e.g., the electronic device 101 in FIG. 1, or the external electronic device 201 in FIG. 1, FIG. 2, or FIG. 4) during the set time period to a packet indicating that the packet is discarded.

According to an embodiment, flush points for the packets transmitted during the set time period may be adjusted by the external electronic device (e.g., the electronic device 101 in FIG. 1, or the external electronic device 201 in FIG. 1, FIG. 2, or FIG. 4).

According to an embodiment, the flush points may be set time points at which the packets transmitted during the set time period are discarded, and the flush points may be adjusted based on a maximum number of sub-events included in each connected isochronous stream (CIS) event included in the set time period and a number of new data packets which may be transmitted within a time interval in which a CIS event occurs.

According to an embodiment, each CIS event may include an opportunity for the electronic device (e.g., the first electronic device 202 in FIG. 2 or FIG. 4, or the second electronic device 204 in FIG. 2 or FIG. 4) and the external electronic device (e.g., the electronic device 101 in FIG. 1, or the external electronic device 201 in FIG. 1, FIG. 2, or FIG. 4) to exchange a packet.

According to an embodiment, each of the sub-events may be used for the external electronic device (e.g., the electronic device 101 in FIG. 1, or the external electronic device 201 in FIG. 1, FIG. 2, or FIG. 4) to transmit a packet and for the electronic device (e.g., the first electronic device 202 in FIG. 2 or FIG. 4, or the second electronic device 204 in FIG. 2 or FIG. 4) to respond to the external electronic device (e.g., the electronic device 101 in FIG. 1, or the external electronic device 201 in FIG. 1, FIG. 2, or FIG. 4).

A Bluetooth scheme may include a Bluetooth legacy (or Bluetooth classic) scheme, or a Bluetooth low energy (BLE) scheme. Each of electronic devices (e.g., a first electronic device 202 and a second electronic device 204 in FIG. 2 or FIG. 4) using a low energy audio (LE Audio) service of the BLE scheme may independently establish a connection (e.g., a communication link) with an external electronic device (e.g., an electronic device 101 in FIG. 1 or an external electronic device 201 in FIG. 2, FIG. 3, or FIG. 4), and transmit and receive data with the external electronic device via the established connection. For example, if a scheme of establishing the communication link between the external electronic device and each of the electronic devices (e.g., the first electronic device and/or the second electronic device) is the Bluetooth scheme, the communication link may be a CIS connection. For example, a communication link established between the external electronic device and the first electronic device may be a first communication link, a communication link established between the external electronic device and the second electronic device may be a second communication link, and a communication link established between the first electronic device and the second electronic device may be a third communication link. Each of the first electronic device and the second electronic device may operate as an audio sink device, and the external electronic device may operate as an audio source device. For example, the first electronic device may perform a first audio channel (e.g., left audio channel) role, and the second electronic device may perform a second audio channel (e.g., right audio channel) role.

If the audio service is provided, each of the first electronic device and the second electronic device may transmit, to an external electronic device, audio data inputted via a microphone of each of the first electronic device and the second electronic device. Each of the first electronic device and the second electronic device may transmit and receive the audio data with the external electronic device via a communication link established based on the BLE scheme.

An LE audio service provided in a BLE scheme is a next-generation Bluetooth audio service. In a Bluetooth legacy scheme, a Bluetooth basic rate/enhanced data rate (BR/EDR) scheme is used, and an advanced audio distribution profile (A2DP) or a hands-free profile (HFP) is used, whereas in the LE audio service, a broadcast audio scheme for a multi-stream audio scheme and an audio sharing scheme is used.

In the multi-stream audio scheme, independent audio streams may be transmitted to one or more electronic devices. A connected isochronous group (CIG) or a CIS has been introduced to support the multi-stream audio scheme.

The CIG may be generated by a central device and may include two or more CISes. For example, the CIG may include two or more CISes with the same time interval (e.g., ISO_Interval).

The CIS is a logical transport which enables connected devices to transfer isochronous data in either direction. The CIS is based on a point-to-point scheme and is based on acknowledgment (ACK)-based two-way communication.

An isochronous connection may be used to transfer isochronous data between a central device and a peripheral device using a logical transport called CIS. The CIS may include CIS events which occur at regular intervals (e.g., a specified ISO_Interval). A CIS event may be an opportunity for the central device and peripheral device to exchange audio packets.

Each CIS event may include one or more sub-events. Each sub-event may be used by the central device to transmit an audio packet and the peripheral device to respond to the master device. In each sub-event, the central device transmits once and the peripheral device may respond. If the central device and the peripheral device completed transferring scheduled isochronous data in a CIS event, all remaining sub-events in the CIS event will have no radio transmissions, so the CIS event may be closed.

Each sub-event may use a physical channel which is determined by using a channel selection algorithm. The physical channel which is used for a sub-event may be marked as ISO Ch(eventcount, subeventcount). The eventcount may represent a count value of a corresponding CIS event, and the subeventcount may represent a count value of a sub-event in the corresponding CIS event.

A CIG event may include CIS events of CISes included in a CIG. Each CIG event starts at an anchor point of the earliest (in terms of transmission order) CIS and ends at the end of the last sub-event of the latest (in terms of transmission order) CIS of the same CIG event. Two CIG events on the same CIG may not overlap. For example, the last CIS event of a given CIG event may end before the first CIS anchor point of the next CIG event.

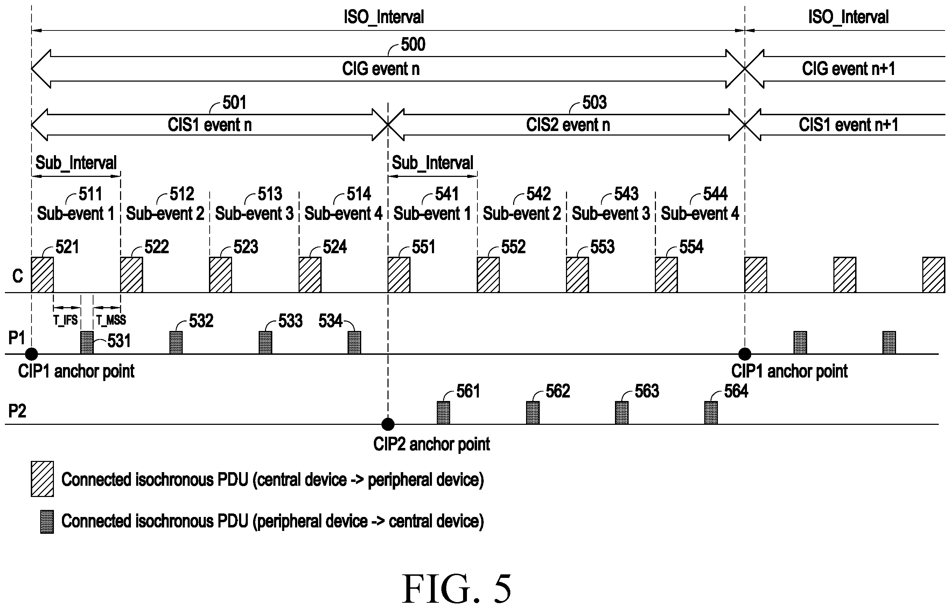

FIG. 5 is a diagram illustrating configuration of CIG events and CIS events in a wireless communication network according to an embodiment.

Referring to FIG. 5, one CIG event (e.g., a CIG event n 500) may include two CIS events (e.g., a CIS1 event n 501 and a CIS2 event n 503). For example, the CIS1 event n 501 may be a CIS event corresponding to a CIS1, and the CIS2 event n 503 may be a CIS event corresponding to a CIS2.

CISes included in a CIG may be arranged sequentially or interleaved by appropriately adjusting values of Sub_Interval and spacing between CIS anchor points, and a case that the CIS1 event n 501 and the CIS2 event n 503 included in the CIG event n 500 are arranged sequentially is illustrated in FIG. 5. For example, the CIG event n 500 illustrated in FIG. 5 may be a CIG event including the CIS1 event n 501 and the CIS2 event n 503 in sequential arrangement.

If the CIS1 event n 501 and the CIS2 event n 503 are arranged sequentially, CIS events of other CISes may not overlap, so sub-events of a CIS event may also not overlap. For example, if the CIS1 event n 501 and the CIS2 event n 503 are arranged sequentially, the CIS1 event n 501 and the CIS2 event n 503 may not overlap, so sub-events included in the CIS1 event n 501 (e.g., a sub-event 1 511, a sub-event 2 512, a sub-event 3 513, a sub-event 4 514) and sub-events included in the CIS2 event n 503 (e.g., a sub-event 1 541, a sub-event 2 542, a sub-event 3 543, and a sub-event 4 544) may not overlap.

A case that the CIS events of the other CISes may not overlap if the CIS1 event n 501 and the CIS2 event n 503 are arranged sequentially, so the sub-events of the CIS event may also not overlap has been described as an example in FIG. 5.

Alternatively, sub-events of a plurality of CIS events may overlap. For example, at least one of the sub-events included in the CIS1 event n 501 and at least one of the sub-events included in the CIS2 event n 503 may overlap. For example, it will be assumed that there are six sub-events (the sub-event 1 511, the sub-event 2 512, the sub-event 3 513, the sub-event 4 514, the sub-event 1 541, and the sub-event 2 542), and two of the six sub-events overlap. For example, it will be assumed that the CIS1 event n 501 includes the sub-event 1 511, the sub-event 2 512, the sub-event 3 513, and the sub-event 4 514, and the CIS2 event n 503 includes the sub-event 3 513, the sub-event 4 514, the sub-event 1 541, and the sub-event 2 542. In this case, if the sub-event 1 511 and the sub-event 2 512 are used in the CIS1 event n 501, the sub-event 3 513, the sub-event 4 514, the sub-event 1 541, and the sub-event 2 542 may be used, and alternatively, if the sub-event 1 511, the sub-event 2 512, the sub-event 3 513, and the sub-event 4 514 are used in the CIS1 event n 501, the sub-event 1 541 and the sub-event 2 542 may be used the CIS2 event n 503.

For each adjacent pair of CISes, an interval between CIS anchor points of the CISes may be at least number of sub-event (NSE) X Sub_Interval. NSE may represent the number of sub-events and may represent the maximum number of sub-events included in each CIS event. In FIG. 5, "C" may represent a central device, "P1" may represent a first peripheral device, and "P2" may represent a second peripheral device.

The central device may transmit a connected isochronous protocol data unit (PDU) 521 in the sub-event 1 511, the central device may transmit a connected isochronous PDU 522 in the sub-event 2 512, the central device may transmit a connected isochronous PDU 523 in the sub-event 3 513, and the central device may transmit a connected isochronous PDU 524 in the sub-event 4 514. Each of the connected isochronous PDU 521, the connected isochronous PDU 522, the connected isochronous PDU 523, and the connected isochronous PDU 524 may be a connected isochronous PDU transmitted from a central device to a peripheral device.

The first peripheral device may transmit a connected isochronous PDU 531 in the sub-event 1 511, the first peripheral device may transmit a connected isochronous PDU 532 in the sub-event 2 512, the first peripheral device may transmit a connected isochronous PDU 533 in the sub-event 3 513, and the first peripheral device may transmit a connected isochronous PDU 534 in the sub-event 4 514. Each of the connected isochronous PDU 531, the connected isochronous PDU 532, the connected isochronous PDU 533, and the connected isochronous PDU 534 may be a connected isochronous PDU transmitted from the first peripheral device to the central device. T_IFS may represent time inter frame space and may indicate a time interval between consecutive packets on the same channel index. T_MSS may represent minimum sub-event space, and may be, for example, 150 µs.

The central device may transmit a connected isochronous PDU 551 in the sub-event 1 541, the central device may transmit a connected isochronous PDU 552 in the sub-event 2 542, the central device may transmit a connected isochronous PDU 553 in the sub-event 3 543, and the central device may transmit a connected isochronous PDU 554 in the sub-event 4 544. Each of the connected isochronous PDU 551, the connected isochronous PDU 552, the connected isochronous PDU 553, and the connected isochronous PDU 554 may be a connected isochronous PDU transmitted from the central device to the peripheral device.

The second peripheral device may transmit a connected isochronous PDU 561 in the sub-event 1 541, the second peripheral device may transmit a connected isochronous PDU 562 in the sub-event 2 542, the second peripheral device may transmit a connected isochronous PDU 563 in the sub-event 3 543, and the first peripheral device may transmit a connected isochronous PDU 564 in the sub-event 4 564. Each of the connected isochronous PDU 561, the connected isochronous PDU 562, the connected isochronous PDU 563, and the connected isochronous PDU 564 may be a connected isochronous PDU transmitted from the second peripheral device to the central device.

In an audio sharing scheme, one or more audio packets may be provided to an infinite number of audio sink devices. To support the audio sharing scheme, a broadcast isochronous group (BIG) and a broadcast isochronous stream (BIS) have been proposed. In the audio sharing scheme, an isochronous broadcaster and a synchronized receiver may be required.

The BIS may be a logical transport used to transfer one or more isochronous data streams to all devices for the BIS within a range. The BIS may include one or more sub-events for transmitting isochronous data packets. A sub-event may include slots in which an infinite number of synchronized receivers may receive a broadcast isochronous PDU. The BIS may support transmission of a plurality of new isochronous data packets in every BIS event. There is no acknowledgment protocol for the BIS, so traffic is unidirectional from a broadcasting device.

The BIG may be generated by the isochronous broadcaster. The BIG may include one or more BISes. A plurality of BISes included in the BIG may have a common timing reference based on a broadcaster and may be synchronized in a time domain. For example, a left channel and a right channel of an audio stereo stream, received by separate devices, may need to be rendered simultaneously. The plurality of BISes included in the BIG may be scheduled sequentially or in an interleaved arrangement.

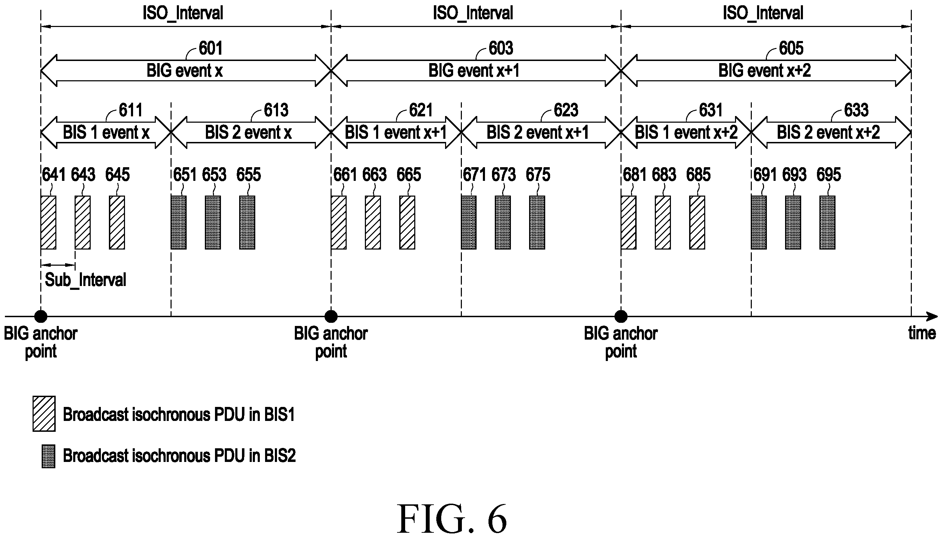

FIG. 6 is a diagram illustrating configuration of BIG events and BIS events in a wireless communication network according to an embodiment.

Referring to FIG. 6, each of BIG events (e.g., a BIG event x 601, a BIG event x+1 603, and a BIG event x+2 603) may include two BIS events. For example, the BIG event x 601 may include a BIS1 event x 611 and a BIS2 event x 613, the BIG event x+1 603 may include a BIS1 event x+1 621 and a BIS2 event x+ 1 623, and the BIG event x+2 605 may include a BIS1 event x+2 631 and a BIS2 event x+2 633.

A BIG event may include one or more BIS PDUs. A link layer may transmit BIS PDUs only in BIG events. The link layer may transmit only BIS PDUs as part of the BIG event. Each BIG event may be divided into Num_BIS BIS events and a control sub-event (if present). Each BIS event may be divided into NSE sub-events. Each BIS event starts at a moment called BIS anchor point and ends after the last sub-event of each BIS event. Each BIG event starts at a moment called BIG anchor point, and ends after one control sub-event if there is the one control sub-event, and otherwise, at the end of the last constituent BIS event.

BIG anchor points may be spaced regularly at ISO_Intervals. BIS anchor points for a BIS n of a BIG may be (n - 1) Y BIS_Spacing after the BIG anchor points, so may be also spaced regularly, ISO_Interval apart. BIS_Spacing may be time between start of sub-events in adjacent BISes included in the BIG and also time between start of the first sub-event of the last BIS and a control sub-event, if present. Sub-events of each BIS may be Sub_Interval apart. The Isochronous broadcaster may close each BIG event at least T_IFS before a BIG anchor point of the next BIG event.

In the BIS1 event x 611, a broadcast isochronous PDU 641, a broadcast isochronous PDU 643, and a broadcast isochronous PDU 645 may be transmitted.

In the BIS2 event x 613, a broadcast isochronous PDU 651, a broadcast isochronous PDU 653, and a broadcast isochronous PDU 655 may be transmitted.

In the BIS1 event x+1 621, a broadcast isochronous PDU 661, a broadcast isochronous PDU 663, and a broadcast isochronous PDU 665 may be transmitted.

In the BIS2 event x+1 623, a broadcast isochronous PDU 671, a broadcast isochronous PDU 673, and a broadcast isochronous PDU 675 may be transmitted.

In the BIS1 event x+2 631, a broadcast isochronous PDU 681, a broadcast isochronous PDU 683, and a broadcast isochronous PDU 685 may be transmitted.

In the BIS2 event x+2 633, a broadcast isochronous PDU 691, a broadcast isochronous PDU 693, and a broadcast isochronous PDU 695 may be transmitted.

While a first electronic device, a second electronic device, and an external electronic device are providing an audio service (e.g., an LE Audio service) based on a BLE scheme, normal provision of the audio service may become impossible due to a change in a radio frequency (RF) environment. For example, the RF environment may affect quality of each of a first communication link which is a communication link between the first electronic device and the external electronic device, a second communication link which is a communication link between the second electronic device and the external electronic device, and/or a third communication link which is a communication link between the first electronic device and the second electronic device.

If quality of at least one of the first communication link, the second communication link, or the third communication link becomes lower than threshold quality due to the change in the RF environment, normal transmission and reception of audio data via the communication link having the quality lower than the threshold quality may be impossible. For example, since the normal transmission and reception of the audio data may be impossible via the communication link having the quality lower than the threshold quality, various cases such as a case where sound breakage occurs, a case where sound distortion occurs, a case where loud noise occurs, and/or a case where silence occurs may occur, so service quality degradation may occur due to this.

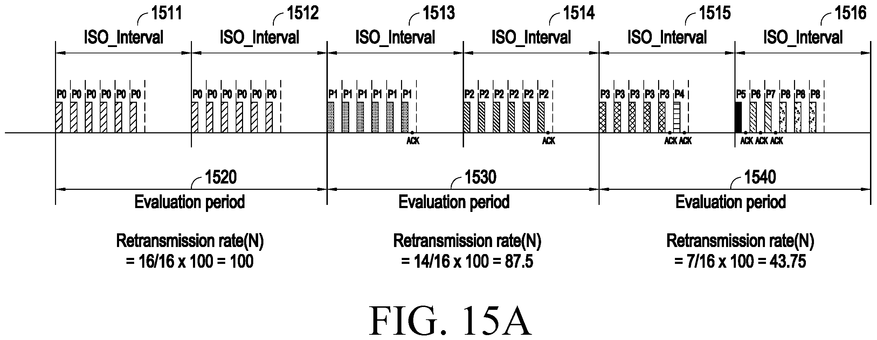

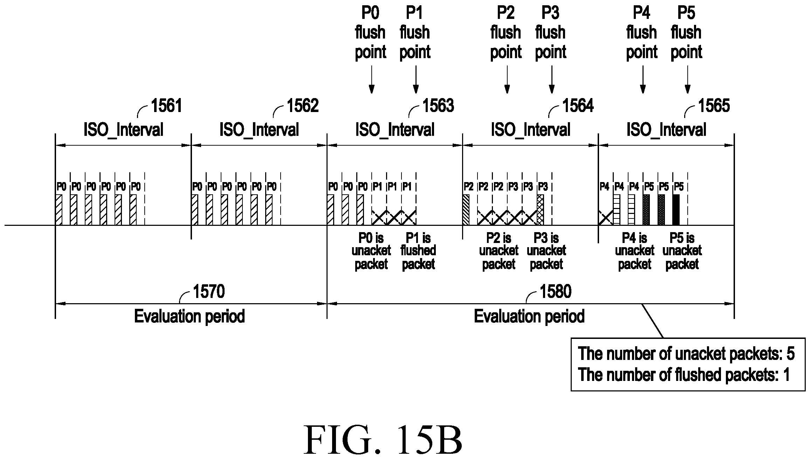

In an embodiment, quality of a communication link may be determined based on channel quality. The channel quality may be represented by at least one of a moving average value (e.g., an exponential moving average (EMA) value), the number of unacked packets during an evaluation period, the number of flushed packets during the evaluation period, a noise level, a block error rate (BLER), a frame error rate (FER), a bit error rate (BER), a packet error rate (PER), a received signal strength indicator (RSSI), a signal to interference and noise ratio (SINR), a signal to noise ratio (SNR), packet retransmission time, the number of transmitted packets per unit time, or a retransmission rate. In an embodiment, an unacked packet may represent a transmitted packet (e.g., an audio packet) for which an ACK packet is not received as a response packet, and a flushed packet may represent a transmitted packet (e.g., an audio packet) which is not transmitted and is dropped (e.g., discarded). In an embodiment, the evaluation period may be a period used for identifying quality of a communication link. In an embodiment, the evaluation period may include a set number of ISO_Intervals. The number of ISO_Intervals included in the evaluation period may vary according to a situation of a wireless communication network, and the evaluation period may be implemented in a form that includes not only ISO_Intervals but also other types of time intervals. The evaluation period will be described in more detail with reference to FIGS. 15a and 15b below. In an embodiment, the channel quality may be detected for each channel, and the channel quality may be detected for each channel, based on the at least one of the moving average value, the number of the unacked packets during the evaluation period, the number of flushed packets during the evaluation period, the noise level, the BLER, the FER, the BER, the PER, the RSSI, the SINR, the SNR, the packet retransmission time, the number of transmitted packets per unit time, or the retransmission rate. For example, if at least one of the following occurs: if the moving average value exceeds a threshold moving average value, if the number of unacked packets during the evaluation period exceeds a threshold number of unacked packets, if the number of flushed packets during the evaluation period exceeds a threshold number of flushed packets, if the noise level exceeds a threshold noise level, if the BLER exceeds a threshold BLER, if the RSSI is less than a threshold RSSI, if the SINR is less than a threshold SINR, if the SNR is less than a threshold SNR, if the BER exceeds a threshold BER, if the PER exceeds a threshold PER, if the packet retransmission time exceeds threshold packet retransmission time, if the number of transmitted packets per unit time is less than a threshold number of transmitted packets per unit time, or if the retransmission rate exceeds a threshold retransmission rate, the quality of the communication link may be less than threshold quality.

In the disclosure, a case where the channel quality is represented by the at least one of the moving average value, the noise level, the number of unacked packets during the evaluation period, the number of flushed packets during the evaluation period, the BLER, the FER, the BER, the PER, the RSSI, the SINR, the SNR, the packet retransmission time, the number of transmitted packets per unit time, or the retransmission rate has been described as an example, but the disclosure is not limited to the case where the channel quality is represented by the at least one of the moving average value, the noise level, the number of unacked packets during the evaluation period, the number of flushed packets during the evaluation period, the BLER, the FER, the BER, the PER, the RSSI, the SINR, the SNR, the packet retransmission time, the number of transmitted packets per unit time, or the retransmission rate. In the disclosure, the expression "quality of a communication link is less than threshold quality" has been used, but the expression that the quality of the communication link is less than the threshold quality may be used interchangeably with the expression that degradation occurs in the communication link or that an RF environment is bad.

For example, if quality of a first communication link among a plurality of communication links is lower than threshold quality, most of transmission opportunities given for a set time interval may be given to a first audio packet, which is a first audio packet transmitted among audio packets (e.g., a first audio packet to a sixth audio packet) transmitted in the set time interval (e.g., at least one ISO_Interval) in the first communication link. Accordingly, only a minimum number of transmission opportunities may be given to audio packets transmitted after the first audio packet in the first communication link, and various cases such as a case where sound breakage occurs, a case where sound distortion occurs, a case where loud noise occurs, and/or a case where silence occurs may occur, so service quality degradation may occur due to this.

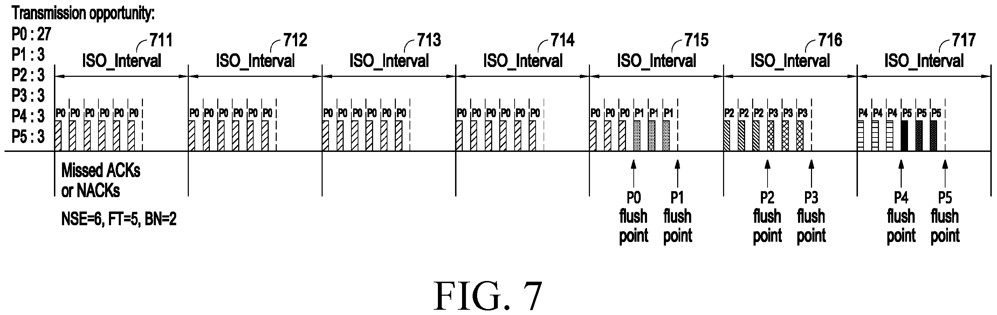

FIG. 7 is a diagram illustrating an example of transmissions of audio packets in a wireless communication network according to an embodiment.

Referring to FIG. 7, transmissions of audio packets (e.g., a packet P0, a packet P1, a packet P2, a packet P3, a packet P4, and a packet P5) may be transmissions of audio packets in a case where NSE is 6 (NSE = 6), FT is 5 (FT = 5), and BN is 2 (BN = 2). In FIG. 7, one ISO_Interval may include at least 6 sub-events, and sub-events included in each of an ISO_Interval 711 to an ISO_Interval 717 may be a first sub-event to a sixth sub-event according to orders thereof. The transmissions of the audio packets illustrated in FIG. 7 may be transmissions of audio packets in a communication link established between an audio source device and a first audio sink device. For example, the audio source device may be an external electronic device (e.g., an electronic device 101 in FIG. 1, or an external electronic device 201 in FIG. 2, FIG. 3, or FIG. 4), the first audio sink device may be a first electronic device (e.g., a first electronic device 202 in FIG. 2 or FIG. 4), and the communication link may be a first communication link established between the external electronic device and the first electronic device.

In an embodiment, FT may be flush timeout and may represent the maximum number of CIS events which may be used to transmit (or retransmit) a given CIS data PDU (e.g., an audio packet). For example, FT may be any value between 1 and 255.

In an embodiment, a flush point may be set for each audio packet. The flush point may represent a time point at which an audio packet is to be dropped (for example, to be discarded) by a link layer. For example, the flush point may represent a time point at which the audio packet is set to be dropped (for example, to be discarded).

In an embodiment, BN may be a burst number and may represent the number of new audio packets which may be transmitted within an ISO_Interval.

As illustrated in FIG. 7, in the case where NSE = 6, FT = 5, and BN = 2, if quality of a communication link is less than threshold quality, normal transmission and reception of audio packets may be impossible in a corresponding communication link. The audio packets may not be transmitted normally in the corresponding communication link during a set time interval (e.g., 7 ISO_Intervals 711, 711, 713, 714, 175, 716, and 717).

For example, a packet P0 may not be transmitted normally in the first ISO_Interval 711. In this case, the packet P0 may be retransmitted up to a flush point set for the packet P0. Since a case where FT = 5 has been assumed in FIG. 7, the packet P0 may be retransmitted up to a flush point located at a fifth ISO_Interval 715 based on FT = 5, and a location of the flush point for the packet P0 in the fifth ISO_Interval 715 may be set based on a value of NSE/BN. Since a case where NSE = 6 and BN = 2 has been assumed in FIG. 7, a flush point for the packet P0 may be located at a third sub-event of the fifth ISO_Interval 715.

In this way, since the retransmission for the packet P0 is performed up to the flush point located at the third sub-event of the fifth ISO_Interval 715, only transmission opportunities corresponding to three sub-events may be provided for each of the packet P1, the packet P2, the packet P3, the packet P4, and the packet P5 which are the remaining audio packets. For example, a flush point for the packet P1 may be located at a sixth sub-event of the fifth ISO_Interval 715, a flush point for the packet P2 may be located at a third sub-event of the sixth ISO_Interval 716, a flush point for the packet P3 may be located at a sixth sub-event of the sixth ISO_Interval 716, the flush point for the packet P4 may be located at a third sub-event of the seventh ISO_Interval 717, and the flush point for the packet P5 may be located at a sixth sub-event 770 of the seventh ISO_Interval 717.

In this way, since the quality of the communication link is less than the threshold quality, a total of 27 transmission opportunities are given to the packet P0, whereas only a total of 3 transmission opportunities may be given to each of the packets P1, P2, P3, P4, and P5. So, most of the transmission opportunities given in the time interval set in the communication link may be given to the packet P0, and only the minimum transmission opportunities may be given to the packets P1, P2, P3, P4, and P5 which are the remaining packets transmitted after the packet P0, various cases such as a case where sound breakage occurs, a case where sound distortion occurs, a case where loud noise occurs, and/or a case where silence occurs may occur, so service quality degradation may occur due to this. A transmission opportunity may also be referred to as a "Tx packet count".

An embodiment of the disclosure may provide a scheme for stably providing an audio service while reducing (for example, minimizing) retransmission operations due to degradation of quality of a communication link. In the disclosure, an audio service is used as an example to describe an embodiment, but the disclosure may be applied not only to the audio service but also to all coordinated communication services which a first electronic device, a second electronic device, and an external electronic device may provide in cooperation with each other.

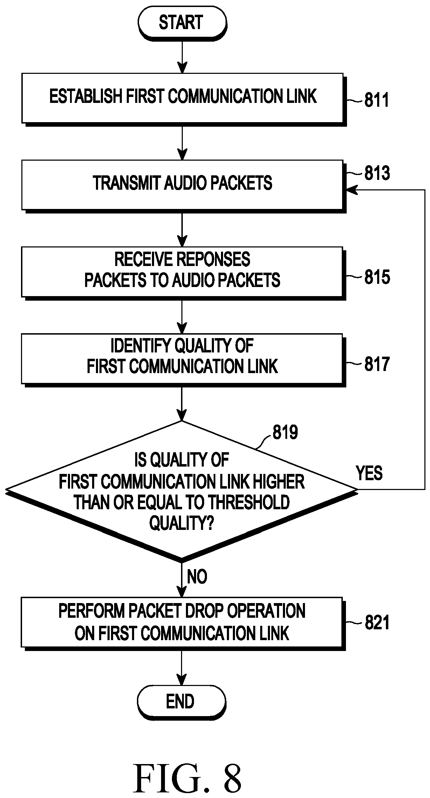

FIG. 8 is a flowchart illustrating an example of an operating process of an external electronic device in a wireless communication network according to an embodiment.

Referring to FIG. 8, in operation 811, a processor (e.g., a processor 120 in FIG. 1 or a processor 304 in FIG. 3) of an external electronic device (e.g., an electronic device 101 in FIG. 1, or an external electronic device 201 in FIG. 2, FIG. 3, or FIG. 4) may establish a communication link (e.g., a first communication link) with a first electronic device (e.g., a first electronic device 202 in FIG. 2 or FIG. 4) via a communication circuit (e.g., a communication module 190 in FIG. 1 or a communication circuit 302 in FIG. 3). Although FIG. 8 illustrates a case where the processor establishes the first communication link with the first electronic device as an example, the processor may also establish a communication link (e.g., a second communication link) with a second electronic device (e.g., a second electronic device 204 in FIG. 2 or FIG. 4), so operations 813 to 821 applied to the first communication link may also be applied to the second communication link. In an embodiment, operations 813 to 821 applied to the first communication link may also be applied to a third communication link established between the first electronic device and a second electronic device (e.g., a second electronic device 204 in FIG. 2 or FIG. 4).

In an embodiment, the first communication link may be a CIS connection. Each CIS may be associated with asynchronous connection-oriented (ACL), and a CIS supports variable size-audio packets and supports transmission of one or more audio packets at each isochronous event. An acknowledgment protocol may be used for improving reliability of audio packet delivery in the CIS.

An operation of the processor to establish the first communication link according to an embodiment is specifically described as follows.

The processor may allocate an identifier to each CIS, and an identifier allocated to the CIS may be a CIS_ID. The processor may transmit the CIS_ID to the first electronic device via the communication circuit. Each CIS may be defined by the following parameters:
(1) ISO_Interval
   ISO_Interval may be time between CIS anchor points of adjacent CIS events.
(2) Sub_Interval
   Sub_Interval may be time between starts of two consecutive sub-events of a CIS.
(3) SE_Length
   SE_Length may be a maximum length of a sub-event.
(4) Max_PDU
   Max_PDU may be the maximum number of data octets which may be delivered in each CIS data PDU (e.g., audio packet), and a value of Max_PDU may be different in each direction. In an embodiment, each direction may be a direction from a central device (e.g., an audio source device) to a peripheral device (e.g., an audio sink device), or a direction from the peripheral device to the central device. In an embodiment, an external electronic device may be the audio source device and a first electronic device may be the audio sink device.
(5) Max_SDU
   Max_SDU may be a maximum size of a service data unit (SDU) in a CIS, and a value of Max_SDU may be different in each direction.
(6) MPT_{M} and MPT_{S}
   MPT_{M} may be time taken by a master device to transmit a packet including a CIS PDI having a payload of Max_PDU octets in a physical channel being used for a CIS.
   MPT_{S} may be time taken by a slave device to transmit a packet including a CIS PDI having a payload of Max_PDU octets in a physical channel being used for a CIS.
   MPT_{M} and MPT_{S} may be the same.
(7) NSE
   NSE may be a maximum number of sub-events in each CIS event.
(8) BN and FT
   Which data is transmitted in each CIS event may be controlled by BN and FT, and a value of BN and FT may be different in each direction.

### (8) Framed

Framed may indicate whether a CIS delivers framed data or unframed data. A value of Framed can be the same in both directions.

In an embodiment, parameters such as the ISO _Interval, the Sub_Interval, the SE_Length, the Max_PDU, the Max_SDU, the MPT_{M} and the MPT_{S}, the NSE, the BN and the FT, and the Framed may not be changed during lifetime of the CIS.

A processor, which establishes the first communication link with the first electronic device, may transmit audio packets to the first electronic device via the communication circuit in the established first communication link in operation 813.

A processor which transmits the audio packets may receive response packets to the audio packets via the communication circuit in the first communication link in operation 815. In an embodiment, a response packet may be an acknowledgment (ACK) packet or a non-acknowledgment (NACK) packet.

A processor which receives the response packets to the audio packets may identify quality of the first communication link based on the received response packets in operation 817. In an embodiment, the processor may transmit audio packets during an evaluation period, and identify the quality of the first communication link based on response packets received for the audio packets transmitted during the evaluation period. In an embodiment, the evaluation period may include a set number of ISO_Intervals. The number of ISO_Intervals included in the evaluation period may vary according to a situation of a wireless communication network, and the evaluation period may be implemented in a form which includes not only ISO_Intervals but also other types of time intervals. The evaluation period will be described in more detail with reference to FIGS. 15a and 15b below.

In an embodiment, the processor may identify the quality of the first communication link based on at least one of a moving average value, the number of unacked packets during the evaluation period, the number of flushed packets during the evaluation period, a noise level, a BLER, an FER, a BER, a PER, an RSSI, an SINR, an SNR, packet retransmission time, the number of transmitted packets per unit time, or a retransmission rate. For example, if at least one of the following occurs: if the moving average value exceeds a threshold moving average value, if the number of unacked packets during the evaluation period exceeds a threshold number of unacked packets, if the number of flushed packets during the evaluation period exceeds a threshold number of flushed packets, if the noise level exceeds a threshold noise level, if the BLER exceeds a threshold BLER, if the RSSI is less than a threshold RSSI, if the SINR is less than a threshold SINR, if the SNR is less than a threshold SNR, if the BER exceeds a threshold BER, if the PER exceeds a threshold PER, if the packet retransmission time exceeds threshold packet retransmission time, if the number of transmitted packets per unit time is less than a threshold number of transmitted packets per unit time, or if the retransmission rate exceeds a threshold retransmission rate, the quality of the communication link may be less than threshold quality. In FIG. 8, for example, it is assumed that the moving average value is an EMA value, so the processor may identify the quality of the first communication link based on the EMA value in operation 817. The processor which identifies the quality of the first communication link may check whether the quality of the first communication link is higher than or equal to the threshold quality in operation 819. For example, if the EMA value of the first communication link is less than or equal to a threshold EMA value, the processor may identify that the quality of the first communication link is greater than or equal to the threshold quality, and conversely, if the EMA value of the first communication link is greater than the threshold EMA value, the processor may identify that the quality of the first communication link is lower than the threshold quality. In an embodiment, the threshold EMA value may be determined based on a size of a payload included in an audio packet. A size of a payload in which high-sound quality audio data (e.g., audio data whose sound quality is higher than or equal to threshold sound quality) may be larger than a size of a payload including low-sound quality audio data (e.g., audio data whose sound quality is lower than the threshold sound quality). For example, a threshold EMA value determined for a case where the size of the payload included in the audio packet is larger than or equal to a threshold size may be different from a threshold EMA value determined for a case where the size of the payload included in the audio packet is smaller than the threshold size. For example, the threshold EMA value determined for the case where the size of the payload included in the audio packet is larger than or equal to the threshold size may be less than the threshold EMA value determined for the case where the size of the payload included in the audio packet is smaller than the threshold size.

If the quality of the first communication link is higher than or equal to the threshold quality, the processor may return to operation 813.

If the quality of the first communication link is lower than the threshold quality, the processor may perform a packet drop operation on the first communication link in operation 821. The packet drop operation may be an operation of dropping (for example, discarding) audio packets before flush points for audio packets in a communication link whose quality is lower than threshold quality, and transmitting drop indication packets indicating a drop for the audio packets. A drop indication packet may include information indicating an audio packet drop.

In an embodiment, the packet drop operation is described as follows.

Threshold quality may be quality of a communication link corresponding to a threshold value. The threshold may be set based on a retransmission rate during an evaluation interval, an EMA value of the retransmission rate, the number of unacked packets, or the number of flushed packets.

For example, the quality of the communication link may be classified into first quality (e.g., Good RF quality), second quality (e.g., Bad RF quality), and third quality (e.g., Very Bad RF). The first quality may mean quality of the communication link which is greater than or equal to a first threshold value, the second quality may mean quality of the communication link which is less than the first threshold value and greater than or equal to a second threshold value, and the third quality may mean quality of the communication link which is less than the second threshold value. Based on whether the quality of the communication link is the first quality, the second quality, or the third quality, the processor may perform a packet drop operation corresponding to the corresponding quality, and control (or adjust) a flush point.

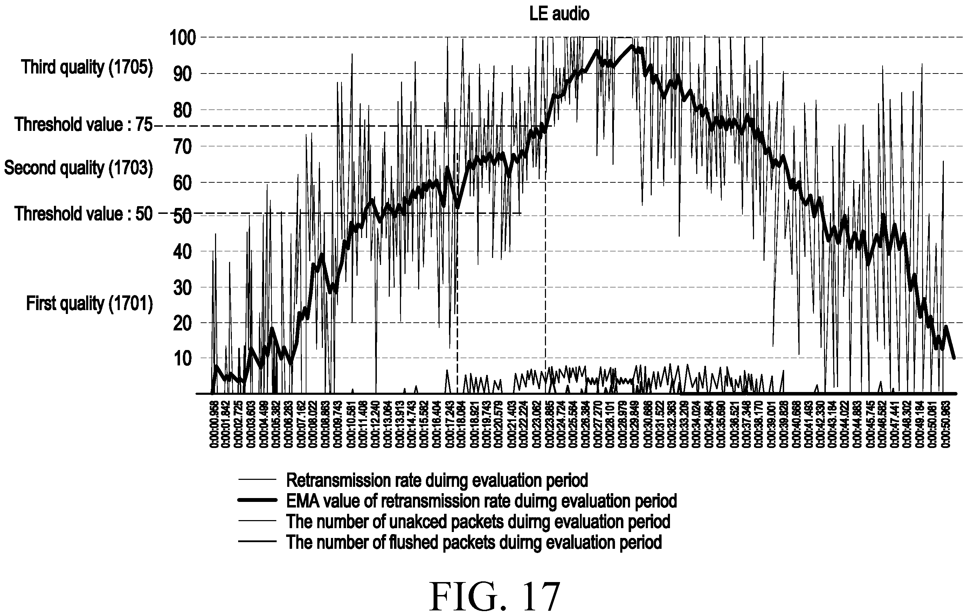

First quality 1701 (e.g., Good RF quality), second quality 1703 (e.g., Bad RF quality), and third quality 1705 (e.g., Very Bad RF) in a case that a first threshold value is 50 and a second threshold value is 75 are illustrated in FIG. 17. A retransmission rate during an evaluation interval, an EMA value of the retransmission rate during the evaluation interval, the number of unacked packets during the evaluation interval, and the number of flushed packets during the evaluation interval are illustrated in FIG. 17. In FIG. 17, a horizontal axis may be a time axis, and a unit thereof may be a second. In FIG. 17, a vertical axis may be a retransmission rate axis, and a unit thereof may be a percentage. A graph illustrated in FIG. 17 may be a graph representing quality of a communication link in a case that an external electronic device moves from a strong electric field region to a weak electric field region, and then moves from the weak electric field region to the strong electric field region again. In a general wireless communication network, as described in FIG. 7, transmission opportunities are given that are determined based on FT and a flush point set for audio data packets, and therefore, if quality of a communication link is lower than threshold quality, most of transmission opportunities given for a set time period may be given to a first audio packet which is an audio packet firstly transmitted among audio packets transmitted in the set time period (e.g., at least one ISO_Interval) in the communication link whose quality is less than the threshold quality. Such imbalance in terms of transmission opportunities may ultimately result in degradation of service quality, so the disclosure may provide a packet drop operation of dropping audio packets transmitted in a communication link whose quality is less than threshold quality before flush points set for the corresponding audio packets. In this way, by making it possible to drop the audio packets transmitted in the communication link whose quality is less than the threshold quality before the flush points set for the corresponding audio packets, the imbalance in terms of transmission opportunities may be resolved, so service quality may be improved.

According to an embodiment, the processor may perform a packet drop operation at a set packet drop ratio. For example, the processor may perform the packet drop operation at the packet drop ratio of 2:1 if the quality of the communication link is less than the threshold quality. If the packet drop ratio is 2:1, the processor may drop an audio packet immediately following two audio packets which are successfully transmitted whenever there are the two audio packets which are successfully transmitted. The processor which drops the corresponding audio packet may generate a drop indication packet which indicates audio packet drop, and transmit the generated drop indication packet to the first electronic device via the communication circuit. As another example, the processor may perform the packet drop operation at a packet drop ratio of 1:1 if the quality of the communication link is less than the threshold quality. If the packet drop ratio is 1:1, the processor may drop an audio packet immediately following one audio packet which is successfully transmitted whenever there is the one audio packet which is successfully transmitted. The processor which drops the corresponding audio packet may generate a drop indication packet, and transmit the generated drop indication packet to the first electronic device via the communication circuit.

According to an embodiment, the drop indication packet may be implemented with an empty (E) packet, may be implemented with a null (N) packet, or may be implemented with a special packet. In an embodiment, the special packet may be implemented with a packet predefined between an external electronic device (e.g., a central device) and the first electronic device (e.g., a first peripheral device), or may be implemented with at least a part of a reserved for future use (RFU) field included in an ISO header field included in an ISO data packet (e.g., an audio packet). In an embodiment, information indicating that a corresponding packet is a drop indication packet may be included in an RFU field included in a header field of a null packet, and in this case, the null packet including the information indicating that the packet is the drop indication packet may be a special packet. In an embodiment, the special packet may include a header field and a payload field, and a payload length of the payload field may be set to 1 byte and a set value (e.g., 0xff) may be included in the payload field. The special packet including the set value may be the drop indication packet. In an embodiment, the payload included in the special packet may include information associated with audio packet drop. For example, the information associated with the audio packet drop may include at least one of information indicating that the corresponding packet is the drop indication packet, information requesting to perform a packet drop operation in a communication link via which the special packet is transmitted, or information about a time point at which the packet drop operation is to be performed in the communication link via which the special packet is transmitted.

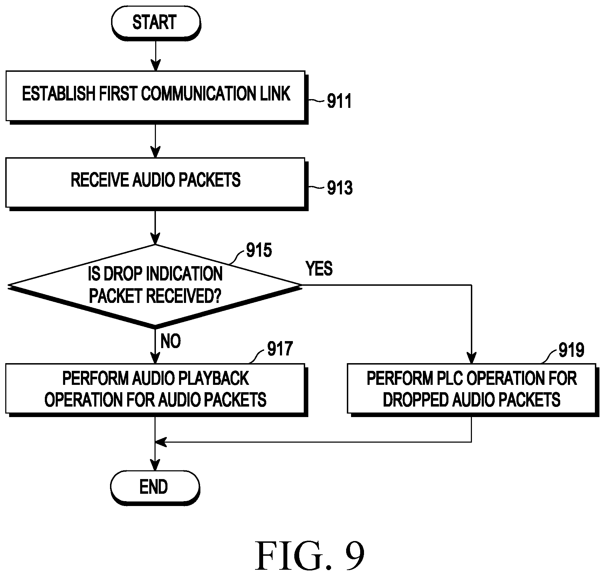

FIG. 9 is a flowchart illustrating an example of an operating process of a first electronic device in a wireless communication network according to an embodiment.

Referring to FIG. 9, in operation 911, a processor (e.g., a processor 410 in FIG. 4) of a first electronic device (e.g., a first electronic device 202 in FIG. 2 or FIG. 4) may establish a communication link (e.g., a first communication link) with an external electronic device (e.g., an electronic device 101 in FIG. 1, or an external electronic device 201 in FIG. 2, FIG. 3, or FIG. 4) via a communication circuit (e.g., a communication circuit 420 in FIG. 4). Although FIG. 9 describes a case where the processor establishes the first communication link with the external electronic device as an example, the processor may also establish a communication link (e.g., a third communication link) with a second electronic device (e.g., a second electronic device 204 in FIG. 2 or FIG. 4), so operations 913 to 917 applied to the first communication link may also be applied to the third communication link. In an embodiment, the operations 913 to 917 applied to the first communication link may also be applied to the third communication link established between the first electronic device and the second electronic device (e.g., the second electronic device 204 in FIG. 2 or FIG. 4). An operation of establishing the first communication link between the first electronic device and the external electronic device may be implemented to be similar to or substantially the same as an operation of establishing the first communication link between the external electronic device and the first electronic device described in FIG. 8, so a detailed description thereof will be omitted.

The processor which establishes the first communication link with the external electronic device may receive audio packets via the communication circuit in the established first communication link in operation 913.

In operation 915, the processor may identify whether the received audio packets include a drop indication packet (for example, may identify whether the drop indication packet is received). The drop indication packet may be implemented to be similar to or substantially the same as that described in FIG. 8, so a detailed description thereof will be omitted.

If the drop instruction packet is not received, the processor may perform an audio playback operation for the received audio packets in operation 917.

If the drop indication packet is received, the processor may identify that a packet drop operation is being performed for the first communication link, and thus an audio packet transmitted in the first communication link is dropped in operation 919. The processor, which identifies that the audio packet is dropped, may perform a packet loss concealment (PLC) operation on the dropped audio packet to restore the dropped audio packet, and may perform an audio playback operation in operation 917. In an embodiment, the PLC operation may be an operation for restoring an audio packet.

If the quality of the first communication link is lower than the threshold quality, the external electronic device may perform the packet drop operation on the first communication link, as described in FIG. 8. In the wireless communication network, since transmission opportunities determined based on FT and flush points are given to audio data packets, as described in FIG. 7, if quality of a communication link is lower than threshold quality, most of the transmission opportunities given for a set time period may be given to a first audio packet, which is an audio packet firstly transmitted among audio packets transmitted in the set time period in the communication link, and only the minimum transmission opportunities may be given to the remaining audio packets after the first audio packet. This imbalance in terms of transmission opportunities may ultimately result in service quality degradation, and as described in FIG. 8, the external electronic device may perform the packet drop operation on the communication link whose quality is lower than the threshold quality to drop (for example, discard) audio packets before flush points set for the audio packets and transmit a drop indication packet indicating audio packet drop. The processor which receives the drop indication packet transmitted from the external electronic device may identify that an audio packet is dropped because the drop indication packet is received even if the flush points for the audio packets have not been reached, and may perform a PLC operation on the dropped audio packet to restore the dropped audio packet, and thus receive audio packets following the dropped audio packet.

In this way, by making it possible to drop audio packets being transmitted in a communication link whose quality is lower than threshold quality before flush points set for the corresponding audio packets, imbalance in terms of transmission opportunities may be resolved, and thus service quality may be improved.

Additionally, although not shown separately in FIG. 9, the processor may transmit response packets to the audio packets received in operation 913. For example, a response packet may be an ACK packet or a NACK packet.

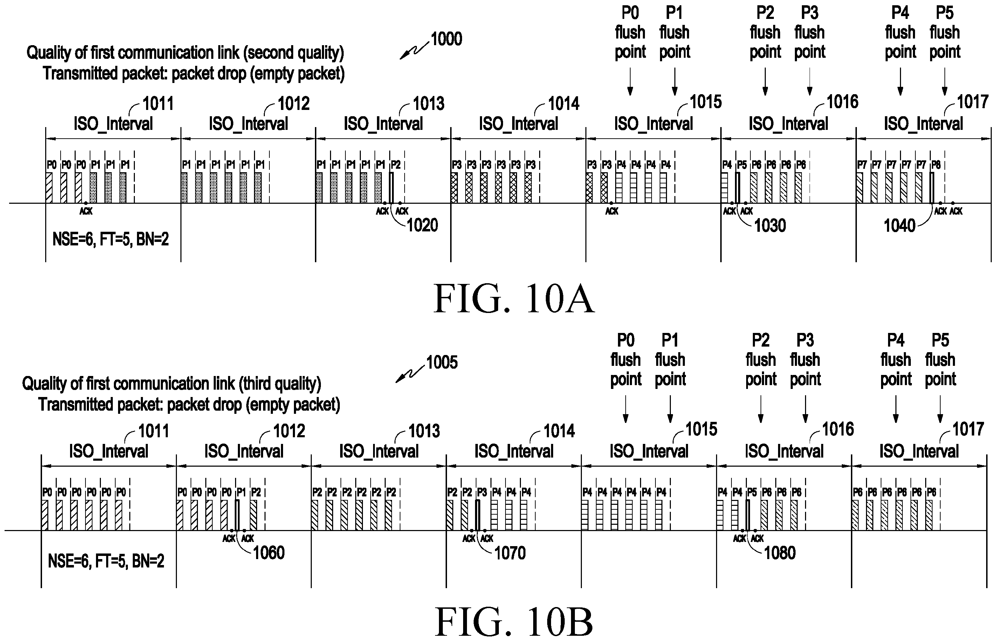

FIGS. 10a and 10b are diagrams illustrating another example of transmissions of audio packets in a wireless communication network according to an embodiment.

Referring to FIGS. 10a and 10b, transmissions 1000 and 1005 of audio packets (e.g., a packet P0, a packet P1, a packet P2, a packet P3, a packet P4, a packet P5, a packet P6, a packet P7, and a packet P8) may be transmissions of audio packets in a case where NSE is 6 (NSE = 6), FT is 5 (FT = 5), and BN is 2 (BN = 2). In FIGS. 10a and 10b, one ISO_Interval may include at least 6 sub-events, and sub-events included in each of an ISO_Interval 1011 to an ISO_Interval 1017 may be a first sub-event to a sixth sub-event according to orders thereof. The transmissions 1000 and 1005 of the audio packets illustrated in FIGS. 10a and 10b may be transmissions of audio packets in a communication link established between an audio source device and a first audio sink device. For example, the audio source device may be an external electronic device (e.g., an electronic device 101 in FIG. 1, or an external electronic device 201 in FIG. 2, FIG. 3, or FIG. 4), the first audio sink device may be a first electronic device (e.g., a first electronic device 202 in FIG. 2 or FIG. 4), and the communication link may be a first communication link established between the external electronic device and the first electronic device.

As illustrated in FIGS. 10a and 10b, in the case where NSE = 6, FT = 5, and BN = 2, if quality of a communication link is less than threshold quality, a packet P0 may not be transmitted normally in the first ISO_Interval 1011. In this case, in a general wireless communication network, the packet P0 may be retransmitted up to a flush point set for the packet P0. Since a case where FT = 5 has been assumed in FIGS. 10a and 10b, the packet P0 may be retransmitted up to a flush point located at a fifth ISO_Interval 1015 based on FT = 5, and the flush point for the packet P0 in the fifth ISO_Interval 1015 may be set based on a value of NSE/BN. Since a case where NSE = 6 and BN = 2 has been assumed in FIGS. 10a and 10b, a flush point for the packet P0 may be located at a third sub-event in the fifth ISO_Interval 1015. In FIGS. 10a and 10b, a flush point for a packet Pn is illustrated in a form of "Pn flush point", where n may be integers greater than or equal to 0.

In this way, if the retransmission for the packet P0 is performed up to the flush point located at the third sub-event 1020 of the fifth ISO_Interval 1015, only transmission opportunities corresponding to three sub-events may be provided for each of the packet P1, the packet P2, the packet P3, the packet P4, and the packet P5 which are the remaining audio packets. For example, a flush point for the packet P1 may be located at a sixth sub-event of the fifth ISO_Interval 1015, a flush point for the packet P2 may be located at a third sub-event of the sixth ISO_Interval 1016, a flush point for the packet P3 may be located at a sixth sub-event of the sixth ISO_Interval 1016, the flush point for the packet P4 may be located at a third sub-event of the seventh ISO_Interval 1017, and the flush point for the packet P5 may be located at a sixth sub-event of the seventh ISO_Interval 1017.

In this way, since the quality of the communication link is less than the threshold quality, in a general wireless communication link, a total of 27 transmission opportunities are given to the packet P0, whereas only a total of 3 transmission opportunities may be given to each of the packets P1, P2, P3, P4, and P5.

Alternatively, in the disclosure, if quality of a communication link is less than threshold quality, a packet drop operation may be performed for the communication link whose quality is less than the threshold quality. For example, an external electronic device may determine to perform the packet drop operation for the communication link whose quality is less than the threshold quality, and based on the determination, may drop a corresponding audio packet and then transmit a drop indication packet.

The external electronic device may drop a corresponding audio packet before a flush point at a set packet drop ratio. In FIGS. 10a and 10b, transmissions of audio packets illustrated by reference numeral 1000 may be transmissions of audio packets if the set packet drop ratio is 2: 1. For example, the packet drop ratio may be 2:1 if quality of a communication link is lower than first threshold quality (for example, if the quality of the communication link is second quality). In FIGS. 10a and 10b, transmissions of audio packets illustrated by reference numeral 1005 may be transmissions of audio packets if the set packet drop ratio is 1: 1. For example, the packet drop ratio may be 1:1 if the quality of the communication link is lower than second threshold quality (for example, if the quality of the communication link is third quality). The second quality may be good quality compared to the third quality, and first quality may be quality which allows normal transmission and reception of audio packets on the corresponding communication link.

If the set packet drop ratio is 2:1, the external electronic device may drop an audio packet immediately following two audio packets which are successfully transmitted whenever there are the two audio packets which are successfully transmitted, and transmit (1000) a drop indication packet.

Transmissions 1000 of audio packets if the set ratio is 2:1 are specifically described as follows.

The external electronic device may receive an ACK packet for a packet P0 in the third sub-event of the first ISO_Interval 1011, and may receive an ACK packet for a packet P1 in the fifth sub-event of the third ISO_Interval 1013. In FIGS. 10a and 10b, "ACK" may represent that an ACK packet is received at a corresponding time point. In FIGS. 10a and 10b, it is assumed that a drop indication packet is implemented with an E packet. Since receipt of an ACK packet for a specific audio packet means that the specific audio packet is successfully transmitted, the external electronic device may drop an audio packet (e.g., a packet P2) immediately following two audio packets which are successfully transmitted, if the two audio packets (e.g., the packet P0 and the packet P1) are successfully transmitted.

The external electronic device which drops the packet P2 may transmit a drop indication packet 1020 for the packet P2 in the sixth sub-event of the third ISO_Interval 1013. The external electronic device may receive an ACK packet for the drop indication packet 1020 for the packet P2 in the sixth sub-event of the third ISO_Interval 1013.

The external electronic device may receive an ACK packet for a packet P3 in the second sub-event of the fifth ISO_Interval 1015, and may receive an ACK packet for a packet P4 in the first sub-event of the sixth ISO_Interval 1016. The external electronic may drop an audio packet (e.g., a packet P5) immediately following two audio packets which are successfully transmitted, if the two audio packets (e.g., the packet P3 and the packet P4) are successfully transmitted.

The external electronic device which drops the packet P5 may transmit a drop indication packet 1030 for the packet P5 in the second sub-event of the sixth ISO_Interval 1016. The external electronic device may receive an ACK packet for the drop indication packet 1030 for the packet P5 in the second sub-event of the sixth ISO_Interval 1016.

The external electronic device may receive an ACK packet for a packet P6 in the sixth sub-event of the sixth ISO_Interval 1016, and may receive an ACK packet for a packet P7 in the fifth sub-event of the seventh ISO_Interval 1017. The external electronic may drop an audio packet (e.g., a packet P8) immediately following two audio packets which are successfully transmitted, if the two audio packets (e.g., the packet P6 and the packet P7) are successfully transmitted.

The external electronic device which drops the packet P8 may transmit a drop indication packet 1040 for the packet P8 in the sixth sub-event of the seventh ISO_Interval 1017. The external electronic device may receive an ACK packet for the drop indication packet 1040 for the packet P8 in the sixth sub-event of the seventh ISO_Interval 1017.

If the set ratio is 1:1, the external electronic device may drop an audio packet immediately following one audio packet which is successfully transmitted when there is the one audio packet which is successfully transmitted, and transmit (1005) a drop indication packet.

Transmissions 1005 of audio packets if the set ratio is 1:1 are specifically described as follows.

The external electronic device may receive an ACK packet for a packet P0 in the fifth sub-event of the second ISO_Interval 1012. If one audio packet (e.g., the packet P0) is successfully transmitted, the external electronic device may drop an audio packet (e.g., a packet P1) immediately following the one audio packet which is successfully transmitted.

The external electronic device which drops the packet P1 may transmit a drop indication packet 1060 for the packet P1 in the sixth sub-event of the second ISO_Interval 1012. The external electronic device may receive an ACK packet for the drop indication packet 1060 for the packet P1 in the sixth sub-event of the second ISO_Interval 1012.

The external electronic device may receive an ACK packet for a packet P2 in the second sub-event of the fourth ISO_Interval 1014. The external electronic device which receives the ACK packet for the packet P2 may determine to drop an immediately following audio packet (e.g., a packet P3).

The external electronic device which drops the packet P3 may transmit a drop indication packet 1070 for the packet P3 in the third sub-event of the fourth ISO_Interval 1014. The external electronic device may receive an ACK packet for the drop indication packet 1070 for the packet P3 in the third sub-event of the fourth ISO_Interval 1014.

The external electronic device may receive an ACK packet for a packet P4 in the second sub-event of the sixth ISO_Interval 1016. The external electronic device which receives the ACK packet for the packet P4 may determine to drop an immediately following audio packet (e.g., a packet P5).

The external electronic device which drops the packet P5 may transmit a drop indication packet 1080 for the packet P5 in the third sub-event of the sixth ISO_Interval 1016. The external electronic device may receive an ACK packet for the drop indication packet 1080 for the packet P5 in the third sub-event of the sixth ISO_Interval 1016.

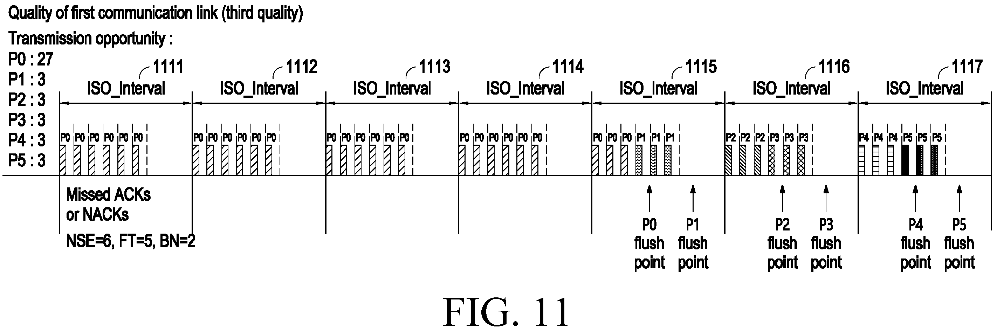

FIG. 11 is a diagram illustrating still another example of transmissions of audio packets in a wireless communication network according to an embodiment.

Referring to FIG. 11, transmissions of audio packets (e.g., a packet P0, a packet P1, a packet P2, a packet P3, a packet P4, and a packet P5) may be transmissions of audio packets in a case where NSE is 6 (NSE = 6), FT is 5 (FT = 5), and BN is 2 (BN = 2). In FIG. 11, one ISO_Interval may include at least 6 sub-events, and sub-events included in each of an ISO_Interval 1111 to an ISO_Interval 1117 may be a first sub-event to a sixth sub-event according to orders thereof. The transmissions of the audio packets illustrated in FIG. 11 may be audio transmissions if quality of a communication link is lower than second threshold quality (e.g., if the quality of the communication link is third quality). The transmissions of the audio packets illustrated in FIG. 11 may be transmissions of audio packets in a communication link established between an audio source device and a first audio sink device. For example, the audio source device may be an external electronic device (e.g., an electronic device 101 in FIG. 1, or an external electronic device 201 in FIG. 2, FIG. 3, or FIG. 4), the first audio sink device may be a first electronic device (e.g., a first electronic device 202 in FIG. 2 or FIG. 4), and the communication link may be a first communication link established between the external electronic device and the first electronic device.

As illustrated in FIG. 11, in the case where NSE = 6, FT = 5, and BN = 2, if quality of a communication link is less than threshold quality, a packet P0 may not be transmitted normally in the first ISO_Interval 1111. In this case, the packet P0 may be retransmitted up to a flush point set for the packet P0. Since a case where FT = 5 has been assumed in FIG. 11, the packet P0 may be retransmitted up to a flush point located at a fifth ISO_Interval 1115 based on FT = 5, and the flush point for the packet P0 in the fifth ISO_Interval 1115 may be set based on a value of NSE/BN. Since a case where NSE = 6 and BN = 2 has been assumed in FIG. 11, a flush point for the packet P0 may be located at a third sub-event in the fifth ISO_Interval 1115. In FIG. 11, a flush point for a packet Pn is illustrated in a form of "Pn flush point", where n may be integers greater than or equal to 0.

In this way, since the retransmission for the packet P0 is performed up to the flush point located at the third sub-event of the fifth ISO_Interval 1115, only transmission opportunities corresponding to three sub-events may be provided for each of the packet P1, the packet P2, the packet P3, the packet P4, and the packet P5 which are the remaining audio packets. For example, a flush point for the packet P1 may be located at a sixth sub-event of the fifth ISO_Interval 1115, a flush point for the packet P2 may be located at a third sub-event of the sixth ISO_Interval 1116, a flush point for the packet P3 may be located at a sixth sub-event of the sixth ISO_Interval 1116, the flush point for the packet P4 may be located at a third sub-event of the seventh ISO_Interval 1117, and the flush point for the packet P5 may be located at a sixth sub-event of the seventh ISO_Interval 1117.

In this way, since the quality of the communication link is less than the threshold quality, a total of 27 transmission opportunities are given to the packet P0, whereas only a total of 3 transmission opportunities may be given to each of the packets P1, P2, P3, P4, and P5. In this way, since the quality of the communication link is less than the threshold quality, a total of 27 transmission opportunities are given to the packet P0, whereas only a total of 3 transmission opportunities may be given to each of the packets P1, P2, P3, P4, and P5. So, most of the transmission opportunities given in the time interval set in the communication link may be given to the packet P0, and only the minimum transmission opportunities may be given to the packets P1, P2, P3, P4, and P5 which are the remaining packets transmitted after the packet P0, various cases such as a case where sound breakage occurs, a case where sound distortion occurs, a case where loud noise occurs, and/or a case where silence occurs may occur, so service quality degradation may occur due to this. In FIG. 11, a transmission opportunity is expressed as a "Tx packet count".

The disclosure may provide a scheme (e.g., a flush point adjustment operation) for adjusting a flush point for an audio packet based on quality of a communication link. In the disclosure, an audio service is used as an example to describe an embodiment, but the disclosure may be applied not only to the audio service but also to all coordinated communication services which a first electronic device, a second electronic device, and an external electronic device may provide in cooperation with each other. In an embodiment, the flush point for the audio packet may be adjusted based on various algorithms.

If the flush point adjustment operation according to an embodiment is performed, in the case where NSE = 6, FT = 5, and BN = 2 as described in FIG. 11, a location of a sub-event including a flush point for each of the packets P0, P1, P2, P3, P4, and P5 may be represented as shown in Table 1 below.

**[Table 1]**

| | Packet P0 | Packet P1 | Packet P2 | Packet P3 | Packet P4 | Packet P5 |
|---|---|---|---|---|---|---|
| First quality | 0 | 0 | 0 | 0 | 0 | 0 |
| Second quality | -6 | -6 | -3 | -3 | 0 | 0 |
| Third quality | -15 | -12 | -9 | -6 | -3 | 0 |

In Table 1, the first quality may be quality of a communication link which is higher than or equal to first threshold quality.

In Table 1, the second quality may be quality of the communication link which is lower than the first threshold quality and higher than or equal to second threshold quality.

In Table 1, the third quality may be quality of the communication link which is lower than the second threshold quality.

Among the first quality, the second quality, and the third quality, the first quality may be the best quality.

The location of the sub-event including the flush point for each of the packet P0, the packet P1, the packet P2, the packet P3, the packet P4, and the packet P5 in a case where the quality of the communication link is classified into three qualities. For example, if the quality of the communication link is the first quality, it may be assumed that the location of the sub-event including the flush point for each of the packets P0, P1, P2, P3, P4, and P5 is "0".

Locations of sub-events including flush points for audio packets in a case where the quality of the communication link is the second quality may be different from locations of sub-events including flush points for audio packets in a case where the quality of the communication link is the first quality. If the quality of the communication link changes from the first quality to the second quality (for example, if the quality of the communication link becomes bad), flush points for audio packets may be adjusted.

As shown in Table 1, if the quality of the communication link is the second quality, the location of the sub-event including the flush point for the packet P0 may be changed from "0" to "-6", the location of the sub-event including the flush point for the packet P1 may be changed from "0" to "-6", the location of the sub-event including the flush point for the packet P2 may be changed from "0" to "-3", the location of the sub-event including the flush point for the packet P3 may be changed from "0" to "-3", the location of the sub-event including the flush point for the packet P4 may be maintained as "0", and the location of the sub-event including the flush point for the packet P5 may be maintained as "0". In Table 1, a negative number may mean how many sub-events a location of a sub-event including a flush point for a corresponding audio packet if the quality of the communication link is the second or third quality is earlier in a time domain than a location of a sub-event including a flush point for a corresponding audio packet if the quality of the communication link is the first quality. Since a flush point is set based on a value of NSE/BN, and a case where NSE = 6 and BN = 2 is assumed in FIG. 11, a location of a sub-event including a flush point for a corresponding audio packet may be moved by a multiple of NSE/BN = 6/2 = 3. If the quality of the communication link is the second quality, a location of a sub-event including a flush point may be moved to precede in a time domain by -3 and -6 in units of two audio packets, which is the same number as BN, compared to a case where the quality of the communication link is the first quality.

Locations of sub-events including flush points for packets if the quality of the communication link is the third quality may be different from locations of sub-events including flush points for the packets if the quality of the communication link is the first quality or locations of sub-events including flush points for the packets if the quality of the communication link is the second quality. If the quality of the communication link changes from the first quality to the second quality or the third quality, or if the quality of the communication link changes from the second quality to the third quality (for example, if the quality of the communication link becomes bad), the flush points for the audio packets may be adjusted. As shown in Table 1, if the quality of the communication link is the third quality, the location of the sub-event including the flush point for the packet P0 may be changed from "0" to "-15", the location of the sub-event including the flush point for the packet P1 may be changed from "0" to "-12", the location of the sub-event including the flush point for the packet P2 may be changed from "0" to "-9", the location of the sub-event including the flush point for the packet P3 may be changed from "0" to "-6", the location of the sub-event including the flush point for the packet P4 may be changed from "0" to "-3", and the location of the sub-event including the flush point for the packet P5 may be maintained as "0". Since a flush point is set based on a value of NSE/BN, and a case where NSE = 6 and BN = 2 is assumed in FIG. 11, a location of a sub-event including a flush point for a corresponding audio packet may be moved by a multiple of NSE/BN = 6/2 = 3. If the quality of the communication link is the third quality, for all audio packets, a location of a sub-event including a flush point of a corresponding audio packet may be moved to precede in the time domain by a multiple of -3, compared to the case where the quality of the communication link is the first quality.

By adjusting a flush point for an audio packet based on quality of a communication link as shown in Table 1, transmission opportunities for audio packets may be maintained appropriately even though the quality of the communication link lower than threshold quality, so an issue of excessive transmission opportunities being given only to specific audio packets may be resolved.

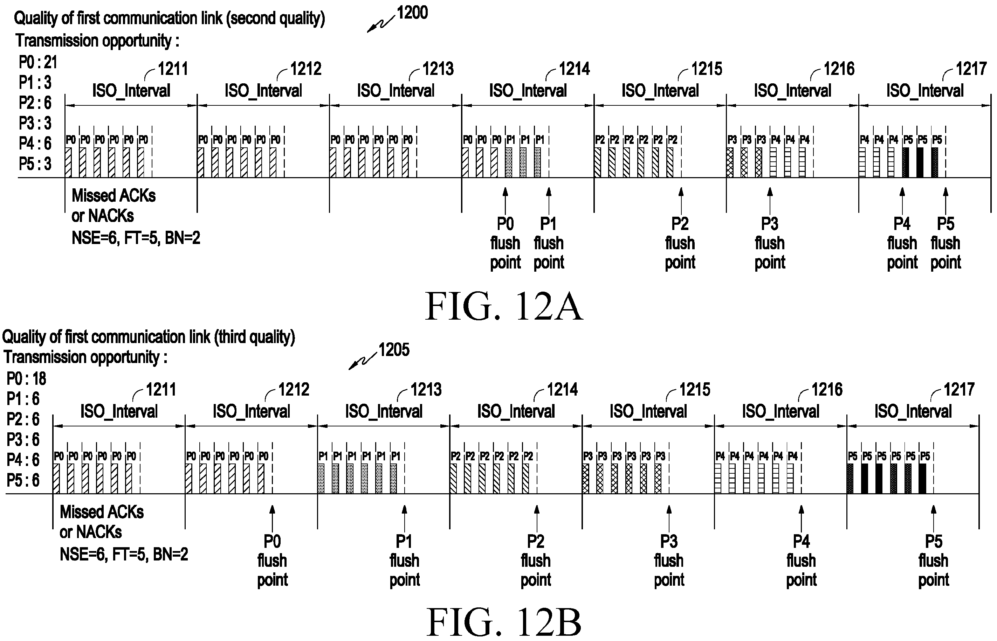

FIGS. 12a and 12b are diagrams illustrating still another example of transmissions of audio packets in a wireless communication network according to an embodiment.

Referring to FIGS. 12a and 12b, transmissions of audio packets (e.g., a packet P0, a packet P1, a packet P2, a packet P3, a packet P4, and a packet P5) may be transmissions of audio packets in a case where NSE is 6 (NSE = 6), FT is 5 (FT = 5), and BN is 2 (BN = 2). In FIGS. 12a and 12b, one ISO_Interval may include at least 6 sub-events, and sub-events included in each of an ISO_Interval 1211 to an ISO_Interval 1217 may be a first sub-event to a sixth sub-event according to orders thereof. The transmissions 1200 and 1205 of the audio packets illustrated in FIGS. 12a and 12b may be transmissions of audio packets in a communication link established between an audio source device and a first audio sink device. For example, the audio source device may be an external electronic device (e.g., an electronic device 101 in FIG. 1, or an external electronic device 201 in FIG. 2, FIG. 3, or FIG. 4), the first audio sink device may be a first electronic device (e.g., a first electronic device 202 in FIG. 2 or FIG. 4), and the communication link may be a first communication link established between the external electronic device and the first electronic device.

As illustrated in FIGS. 12a and 12b, in the case where NSE = 6, FT = 5, and BN = 2, if quality of a communication link is less than threshold quality, a packet P0 may not be transmitted normally in the first ISO_Interval 1211. In this case, in a general wireless communication network, the packet P0 may be retransmitted up to a flush point set for the packet P0. Since a case where FT = 5 has been assumed in FIGS. 12a and 12b, the packet P0 may be retransmitted up to a flush point located at a fifth ISO_Interval 1215 based on FT = 5, and the flush point for the packet P0 in the fifth ISO_Interval 1215 may be set based on a value of NSE/BN. Since a case where NSE = 6 and BN = 2 has been assumed in FIGS. 12a and 12b, a flush point for the packet P0 may be located at a third sub-event in the fifth ISO_Interval 1215. In FIGS. 12a and 12b, a flush point for a packet Pn is illustrated in a form of "Pn flush point", where n may be integers greater than or equal to 0.

In the disclosure, if quality of a communication link is lower than threshold quality, a flush point adjustment operation may be performed for the corresponding communication link. According to the flush point adjustment operation, flush points for audio packets may be adjusted, and audio packets may be transmitted based on the adjusted flush points. In FIGS. 12a and 12b, transmissions of audio packets illustrated by reference numeral 1200 may be transmissions of audio packets if the quality of the communication link is second quality (for example, if the quality of the communication link is lower than first threshold quality), and transmissions of audio packets illustrated by reference numeral 1205 may be transmissions of audio packets if the quality of the communication link is third quality (for example, if the quality of the communication link is lower than second threshold quality).

If the quality of the communication link is the second quality, the external electronic device may adjust flush points for audio packets and transmit (1200) the audio packets based on the adjusted flush points.

The transmissions 1200 of the audio packets if the quality of the communication link is the second quality are described in detail as follows.

In a general wireless communication network, default flush points set for packets P0 to P5 may be used. The default flush point for the packet P0 may be located at a third sub-event in the fifth ISO_Interval 1215, the default flush point for the packet P1 may be located at a sixth sub-event of the fifth ISO_Interval 1215, the default flush point for the packet P2 may be located at a third sub-event of the sixth ISO_Interval 1216, the default flush point for the packet P3 may be located at a sixth sub-event of the sixth ISO_Interval 1216, the default flush point for the packet P4 may be located at a third sub-event of the seventh ISO_Interval 1217, and the default flush point for the packet P5 may be located at a sixth sub-event of the seventh ISO_Interval 1217.

In this way, while the default flush points are being used for the packets P0 to P5, if the quality of the communication link becomes the second quality, the external electronic device may adjust the flush points for the packets P0 to P5. If the quality of the communication link is the second quality, the adjusted flush point for the packet P0 may be located at the third sub-event in the fourth ISO_Interval 1214, the adjusted flush point for the packet P1 may be located at the sixth sub-event of the fourth ISO_Interval 1214, the adjusted flush point for the packet P2 may be located at the sixth sub-event of the fifth ISO_Interval 1215, the adjusted flush point for the packet P3 may be located at the third sub-event of the sixth ISO_Interval 1216, the adjusted flush point for the packet P4 may be located at the third sub-event of the seventh ISO_Interval 1217, and the adjusted flush point for the packet P5 may be located at the sixth sub-event of the seventh ISO_Interval 1217.

If the quality of the communication link is the third quality, the external electronic device may adjust flush points for audio packets and transmit (1205) the audio packets based on the adjusted flush points.

The transmission 1205 of the audio packets if the quality of the communication link is the third quality is specifically described as follows.

Default flush points set for the packets P0 to P5 in a wireless communication network may be the same as the default flush points set for the packets P0 to P5 described if the quality of the communication link is the second quality, so a detailed description thereof will be omitted. According to an embodiment, if the quality of the communication link is the third quality, the external electronic device may adjust the flush points for the packets P0 to P5. If the quality of the communication link is the third quality, the adjusted flush point for the packet P0 may be located at the sixth sub-event in the second ISO_Interval 1212, the adjusted flush point for the packet P1 may be located at the sixth sub-event of the third ISO_Interval 1213, the adjusted flush point for the packet P2 may be located at the sixth sub-event of the fourth ISO_Interval 1214, the adjusted flush point for the packet P3 may be located at the sixth sub-event of the fifth ISO_Interval 1215, the adjusted flush point for the packet P4 may be located at the sixth sub-event of the sixth ISO_Interval 1216, and the adjusted flush point for the packet P5 may be located at the sixth sub-event of the seventh ISO_Interval 1217.

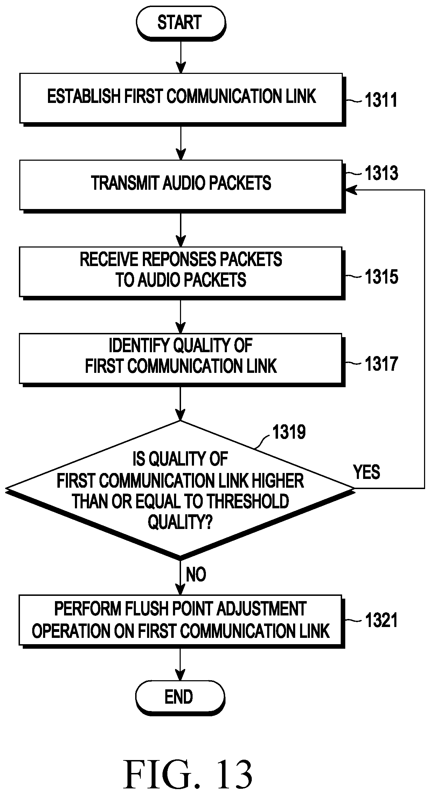

FIG. 13 is a flowchart illustrating another example of an operating process of an external electronic device in a wireless communication network according to an embodiment.

Referring to FIG. 13, in operation 1311, a processor (e.g., a processor 120 in FIG. 1 or a processor 304 in FIG. 3) of an external electronic device (e.g., an electronic device 101 in FIG. 1, or an external electronic device 201 in FIG. 2, FIG. 3, or FIG. 4) may establish a communication link (e.g., a first communication link) with a first electronic device (e.g., a first electronic device 202 in FIG. 2 or FIG. 4) via a communication circuit (e.g., a communication module 190 in FIG. 1 or a communication circuit 302 in FIG. 3). Although FIG. 13 illustrates a case where the processor establishes the first communication link with the first electronic device as an example, the processor may also establish a communication link (e.g., a second communication link) with a second electronic device (e.g., a second electronic device 204 in FIG. 2 or FIG. 4), so operations 1313 to 1321 applied to the first communication link may also be applied to the second communication link. In an embodiment, operations 1313 to 1321 applied to the first communication link may also be applied to a third communication link established between the first electronic device and a second electronic device (e.g., a second electronic device 204 in FIG. 2 or FIG. 4).

In an embodiment, the first communication link may be a CIS connection, and the operation in which the processor establishes the first communication link may be implemented to be similar to or substantially the same as an operation in which an electronic device establishes a first communication link as described in operation 811 in FIG. 8, so a detailed description thereof will be omitted.

A processor, which establishes the first communication link with the first electronic device, may transmit audio packets to the first electronic device via the communication circuit in the established first communication link in operation 1313.

A processor which transmits the audio packets may receive response packets to the audio packets via the communication circuit in the first communication link in operation 1315. In an embodiment, a response packet may be an ACK packet or a NACK packet.

A processor which receives the response packets to the audio packets may identify quality of the first communication link based on the received response packets in operation 1317. In an embodiment, the processor may transmit audio packets during an evaluation period, and identify the quality of the first communication link based on response packets received for the audio packets transmitted during the evaluation period. In an embodiment, the evaluation period may include a set number of ISO_Intervals. The number of ISO_Intervals included in the evaluation period may vary according to a situation of a wireless communication network, and the evaluation period may be implemented in a form which includes not only ISO Intervals but also other types of time intervals. The evaluation period will be described in more detail with reference to FIGS. 15a and 15b below.

In an embodiment, the processor may identify the quality of the first communication link based on at least one of a moving average value, the number of unacked packets during the evaluation period, the number of flushed packets during the evaluation period, a noise level, a BLER, an FER, a BER, a PER, an RSSI, an SINR, an SNR, packet retransmission time, the number of transmitted packets per unit time, or a retransmission rate. In FIG. 13, for example, it is assumed that the moving average value is an EMA value, so the processor may identify the quality of the first communication link based on the EMA value in operation 1317. The operation in which the processor identifies the quality of the first communication link based on the received response packets may be implemented to be similar to or substantially the same as an operation in which the processor identifies the quality of the first communication link based on the received response packets as described in operation 817 in FIG. 8, so a detailed description thereof will be omitted.

The processor which identifies the quality of the first communication link may, in operation 1319, check whether the quality of the first communication link is higher than or equal to threshold quality. For example, the processor may identify that the quality of the first communication link is higher than or equal to the threshold quality if an EMA value of the first communication link is less than or equal to a threshold EMA value, and conversely, may identify that the quality of the first communication link is lower than the threshold quality if the EMA value of the first communication link is greater than the threshold EMA value. In an embodiment, the threshold EMA value may be determined based on a size of a payload included in an audio packet. A size of a payload including high-sound quality audio data (e.g., audio data whose sound quality is higher than or equal to threshold sound quality) may be larger than a size of a payload including low-sound quality audio data (e.g., audio data whose sound quality is lower than the threshold sound quality). For example, a threshold EMA value determined if the size of the payload included in the audio packet is greater than or equal to a threshold size may be different from a threshold EMA value determined if the size of the payload included in the audio packet is less than the threshold size. For example, the threshold EMA value determined if the size of the payload included in the audio packet is greater than or equal to the threshold size may be less than the threshold EMA value determined if the size of the payload included in the audio packet is less than the threshold size.

If the quality of the first communication link is higher than or equal to the threshold quality, the processor may return to operation 1313.

If the quality of the first communication link is lower than the threshold quality, the processor may perform a flush point adjustment operation on the first communication link in operation 1321. A flush point adjustment operation may be an operation of adjusting flush points for audio packets in a communication link whose quality is lower than threshold quality. For example, the flush point adjustment operation may be an operation of changing the flush points for the audio packets in the communication link whose quality is lower than the threshold quality from default flush points to adjusted flush points.

In a general wireless communication network, as described in FIG. 11, transmission opportunities determined based on FT and a flush point may be given to audio data packets, and therefore, if the quality of the communication link is lower than the threshold quality, most of transmission opportunities given for a set time period may be given to a first audio packet which is an audio packet firstly transmitted among audio packets transmitted in the set time period (e.g., at least one ISO_Interval) in the communication link whose quality is lower than the threshold quality. Such imbalance in terms of transmission opportunities may ultimately result in degradation of service quality, and therefore, the disclosure may provide a flush point adjustment operation for adjusting (for example, changing) flush points for audio packets transmitted in a communication link whose quality is lower than threshold quality. In this way, by adjusting the flush points for the audio packets transmitted in the communication link whose quality is lower than the threshold quality, the imbalance in terms of transmission opportunities may be resolved, and thus the service quality may be improved.

In an embodiment, the processor may adjust flush points for audio packets transmitted in the first communication link based on NSE and BN set for the first communication link. A scheme of adjusting the flush points for the audio packets may be implemented to be similar to or substantially the same as a scheme of adjusting flush points for audio packets described in Table 1, so a detailed description thereof will be omitted.

In an embodiment, if the processor adjusts flush points for audio packets transmitted via the first communication link (for example, changes the flush points for the audio packets transmitted via the first communication link from default flush points to adjusted flush points), the first electronic device may identify whether the flush points for the audio packets are adjusted based on a sequence number (SN) of a received audio packet, even though the first electronic device does not receive separate information associated with the flush points for the audio packets adjusted by the processor.

Alternatively, if the processor adjusts the flush points for the audio packets transmitted via the first communication link, the processor may inform the first electronic device about the adjusted flush points via a communication circuit. For example, the processor may generate a packet including information associated with the adjusted flush points, and transmit the generated packet to the first electronic device via the communication circuit. In this case, the first electronic device may identify the adjusted flush points for the audio packets transmitted via the first communication link based on the information associated with the adjusted flush points included in the received packet, and receive audio packets based on the identified adjusted flush points for the audio packets.

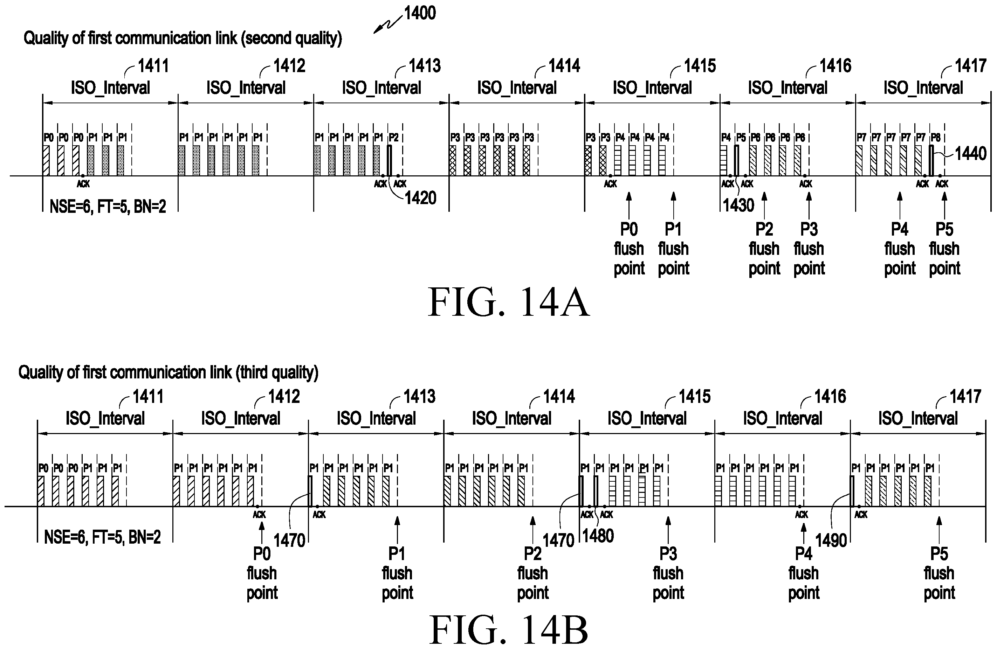

FIGS. 14a and 14b are diagrams illustrating still another example of transmissions of audio packets in a wireless communication network according to an embodiment.

Referring to FIGS. 14a and 14b, transmissions 1400 and 1405 of audio packets (e.g., a packet P0, a packet P1, a packet P2, a packet P3, a packet P4, a packet P5, a packet P6, a packet P7, and a packet P8) may be transmissions of audio packets in a case where NSE is 6 (NSE = 6), FT is 5 (FT = 5), and BN is 2 (BN = 2). In FIGS. 14a and 14b, one ISO_Interval may include at least 6 sub-events, and sub-events included in each of an ISO_Interval 1411 to an ISO_Interval 1417 may be a first sub-event to a sixth sub-event according to orders thereof. The transmissions 1400 and 1405 of the audio packets illustrated in FIGS. 14a and 14b may be transmissions of audio packets in a communication link established between an audio source device and a first audio sink device. For example, the audio source device may be an external electronic device (e.g., an electronic device 101 in FIG. 1, or an external electronic device 201 in FIG. 2, FIG. 3, or FIG. 4), the first audio sink device may be a first electronic device (e.g., a first electronic device 202 in FIG. 2 or FIG. 4), and the communication link may be a first communication link established between the external electronic device and the first electronic device.

As illustrated in FIGS. 14a and 14b, in a case where NSE = 6, FT = 5, and BN = 2, a default flush point for the packet P0 may be located at a third sub-event in the fifth ISO_Interval 1415, a default flush point for the packet P1 may be located at a sixth sub-event of the fifth ISO_Interval 1415, a default flush point for the packet P2 may be located at a third sub-event of the sixth ISO_Interval 1416, a default flush point for the packet P3 may be located at a sixth sub-event of the sixth ISO_Interval 1416, a default flush point for the packet P4 may be located at a third sub-event of the seventh ISO_Interval 1417, and a default flush point for the packet P5 may be located at a sixth sub-event of the seventh ISO_Interval 1417. In FIGS. 14a and 14b, a flush point for a packet Pn is illustrated in the form of a "Pn flush point", where n may be an integer greater than or equal to 0.

If quality of the first communication link is lower than threshold quality (e.g., first threshold quality or second threshold quality) (for example, if the quality of the first communication link is the second quality or the third quality), audio packets may not be transmitted and received normally via the first communication link. In this case, the external electronic device may perform a packet drop operation to drop corresponding audio packets. For example, if the quality of the first communication link is lower than the first threshold quality, the external electronic device may maintain a default flush point for each of the packets P0, P1, P2, P3, P4, P5, P6, P7, and P8, but may drop corresponding audio packets based on a packet drop ratio set before the default flush points of the packets P0, P1, P2, P3, P4, P5, P6, P7, and P8 transmitted via the first communication link, and transmit drop indication packets indicating the dropped audio packets, thereby resolving imbalance in terms of transmission opportunities for audio packets transmitted via the first communication link.

Transmissions of audio packets illustrated by reference numeral 1400 may be transmissions of audio packets if the packet drop ratio applied to the packet drop operation is 2:1. The transmissions of the audio packets if the packet drop ratio is 2:1 may be implemented to be similar to or substantially the same as transmissions of audio packets illustrated by reference numeral 1000 in FIGS. 10a and 10b.

For example, the external electronic device may receive an ACK packet for a packet P0 in the third sub-event of the first ISO_Interval 1411, and may receive an ACK packet for a packet P1 in the fifth sub-event of the third ISO_Interval 1413. In FIGS. 14a and 14b, "ACK" may represent that an ACK packet is received at a corresponding time point. In FIGS. 14a and 14b, it is assumed that a drop indication packet is implemented with an E packet. Since receipt of an ACK packet for a specific audio packet means that the specific audio packet is successfully transmitted, the external electronic device may drop an audio packet (e.g., a packet P2) immediately following two audio packets which are successfully transmitted, if the two audio packets (e.g., the packet P0 and the packet P1) are successfully transmitted.

The external electronic device which drops the packet P2 may transmit a drop indication packet 1420 for the packet P2 in the sixth sub-event of the third ISO_Interval 1413. The external electronic device may receive an ACK packet for the drop indication packet 1420 for the packet P2 in the sixth sub-event of the third ISO_Interval 1413.

The external electronic device may receive an ACK packet for a packet P3 in the second sub-event of the fifth ISO_Interval 1415, and may receive an ACK packet for a packet P4 in the first sub-event of the sixth ISO_Interval 1416. The external electronic may drop an audio packet (e.g., a packet P5) immediately following two audio packets which are successfully transmitted, if the two audio packets (e.g., the packet P3 and the packet P4) are successfully transmitted.

The external electronic device which drops the packet P5 may transmit a drop indication packet 1430 for the packet P5 in the second sub-event of the sixth ISO_Interval 1416. The external electronic device may receive an ACK packet for the drop indication packet 1430 for the packet P5 in the second sub-event of the sixth ISO_Interval 1416.

The external electronic device may receive an ACK packet for a packet P6 in the sixth sub-event of the sixth ISO_Interval 1416, and may receive an ACK packet for a packet P7 in the fifth sub-event of the seventh ISO_Interval 1417. The external electronic may drop an audio packet (e.g., a packet P8) immediately following two audio packets which are successfully transmitted, if the two audio packets (e.g., the packet P6 and the packet P7) are successfully transmitted.

The external electronic device which drops the packet P8 may transmit a drop indication packet 1440 for the packet P8 in the sixth sub-event of the seventh ISO_Interval 1417. The external electronic device may receive an ACK packet for the drop indication packet 1440 for the packet P8 in the sixth sub-event of the seventh ISO_Interval 1417.

Transmissions of audio packets illustrated by reference numeral 1400 may be transmissions of audio packets if the packet drop ratio applied to the packet drop operation is 2:1 and the flush points for the audio packets are not changed.

Alternatively, transmissions of audio packets illustrated by reference numeral 1405 may be transmissions of audio packets if the packet drop ratio applied to the packet drop operation is 1:1 and the flush points for the audio packets are also changed (for example, if a flush point adjustment operation is performed).

If quality of the first communication link is lower than threshold quality (e.g., first threshold quality or second threshold quality) (for example, if the quality of the first communication link is the second quality or the third quality), audio packets may not be transmitted and received normally via the first communication link. In this case, in a general wireless communication network, the external electronic device may perform a packet retransmission operation up to default flush points set for audio packets. Alternatively, in the disclosure, if the quality of the first communication link is lower than the second threshold quality, the external electronic device may not maintain a default flush point for each of the packets P0, P1, P2, P3, P4, P5, P6, P7, and P8, but may newly set a flush point for each of the packets P0, P1, P2, P3, P4, P5, P6, P7, and P8. The external electronic device may change flush points of the packets P0, P1, P2, P3, P4, P5, P6, P7, and P8 transmitted via the first communication link, and transmit a drop indication packet indicating audio packet drop before the changed flush points of the packets P0, P1, P2, P3, P4, P5, P6, P7, and P8, thereby resolving imbalance in terms of transmission opportunities for audio packets transmitted via the first communication link.

Transmissions of audio packets illustrated by reference numeral 1405 may be transmissions of audio packets if the packet drop ratio applied to the packet drop operation is 1:1. The transmissions of the audio packets if the packet drop ratio is 1:1 may be implemented to be similar to or substantially the same as transmissions of audio packets illustrated by reference numeral 1005 in FIGS. 10a and 10b.

For example, in a case where NSE = 6, FT = 5, and BN = 2, as illustrated in FIGS. 14a and 14b, the adjusted flush point for the packet P0 may be located at the sixth sub-event in the second ISO_Interval 1412, unlike the default flush point which is located at the third sub-event in the fifth ISO_Interval 1415, the adjusted flush point for the packet P1 may be located at the sixth sub-event in the third ISO_Interval 1413, unlike the default flush point which is located at the sixth sub-event in the fifth ISO_Interval 1415, the adjusted flush point for the packet P2 may be located at the sixth sub-event in the fourth ISO_Interval 1414, unlike the default flush point which is located at the third sub-event in the sixth ISO_Interval 1416, the adjusted flush point for the packet P3 may be located at the sixth sub-event in the fifth ISO_Interval 1415, unlike the default flush point which is located at the sixth sub-event of the sixth ISO_Interval 1416, the adjusted flush point for the packet P4 may be located at the sixth sub-event of the sixth ISO_Interval 1416, unlike the default flush point which is located at the third sub-event of the seventh ISO_Interval 1417, and the adjusted flush point for the packet P5 may be the same as the default flush point which is located at the sixth sub-event of the seventh ISO_Interval 1417.

The external electronic device may receive an ACK packet for the packet P0 in the sixth sub-event of the second ISO_Interval 1012. If the external electronic device successfully transmits one audio packet (e.g., the packet P0), the external electronic device may drop an audio packet (e.g., the packet P1) immediately following the one audio packet which is successfully transmitted.

The external electronic device which drops the packet P1 may transmit a drop indication packet 1460 for the packet P1 in the first sub-event of the third ISO_Interval 1413. The external electronic device may receive an ACK packet for the drop indication packet 1460 for packet P1 in the first sub-event of the third ISO_Interval 1413.

The external electronic device may receive an ACK packet for the packet P2 in the sixth sub-event of the fourth ISO_Interval 1414. The external electronic device which receives the ACK packet for the packet P2 may drop an immediately following audio packet (e.g., the packet P3).

The external electronic device which drops the packet P3 may transmit a drop indication packet 1470 for the packet P3 in the first sub-event of the fifth ISO_Interval 1415. The external electronic device may receive an ACK packet for the drop indication packet 1470 for the packet P3 in the second sub-event of the fifth ISO_Interval 1415.

The external electronic device may receive an ACK packet for the packet P4 in the sixth sub-event of the sixth ISO_Interval 1416. The external electronic device which receives the ACK packet for the packet P4 may drop an immediately following audio packet (e.g., the packet P5).

The external electronic device which drops the packet P5 may transmit a drop indication packet 1480 for the packet P5 in the first sub-event of the seventh ISO_Interval 1417. The external electronic device may receive an ACK packet for the drop indication packet 1480 for the packet P5 in the first sub-event of the seventh ISO_Interval 1417.

FIG. 15a is a diagram illustrating an example of an operation for identifying quality of a communication link in a wireless communication network according to an embodiment.

Referring to FIG. 15a, one ISO_Interval may include at least six sub-events, and sub-events included in each of an ISO_Interval 1511 to an ISO_Interval 1517 may be, in order, a first sub-event to a sixth sub-event. Transmissions of audio packets illustrated in FIG. 15a may be transmissions of audio packets in a communication link established between an audio source device and a first audio sink device. For example, the audio source device may be an external electronic device (e.g., an electronic device 101 in FIG. 1, or an external electronic device 201 in FIG. 2, FIG. 3, or FIG. 4), the first audio sink device may be a first electronic device (e.g., a first electronic device 202 in FIG. 2 or FIG. 4), and the communication link may be a first communication link established between the external electronic device and the first electronic device.

In an embodiment, the external electronic device may transmit audio packets during an evaluation period, and identify quality of the first communication link based on response packets received for the audio packets transmitted during the evaluation period. In an embodiment, the evaluation period may include a set number of ISO_Intervals. The number of ISO_Intervals included in the evaluation period may vary according to a situation of the wireless communication network, and the evaluation period may be implemented in a form that includes not only ISO Intervals but also other types of time intervals.

In the disclosure, channel quality may be represented by at least one of a moving average value, the number of unacked packets during the evaluation interval, the number of flushed packets during the evaluation interval, a noise level, a BLER, an FER, a BER, a PER, an RSSI, an SINR, an SNR, packet retransmission time, the number of transmitted packets per unit time, or a retransmission rate.

For example, in FIG. 15a, it will be assumed that the channel quality is identified based on an EMA value, which is an example of the moving average value.

FIG. 15a illustrates three evaluation periods (e.g., a first evaluation period 1520, a second evaluation period 1530, and a third evaluation period 1540).

The first evaluation period 1520 may include a first ISO_Interval 1511 and a second ISO_Interval 1512. The external electronic device may perform a transmission and retransmission operations for a packet P0 in the first evaluation period 1520, but may not receive an ACK packet for the packet P0. A retransmission rate N for the first evaluation period 1520 may be 100% in percentage.

The second evaluation period 1530 may include a third ISO_Interval 1513 and a fourth ISO_Interval 1514. The external electronic device may perform a transmission and retransmission operations for a packet P1 and a packet P2 in the second evaluation period 1530. The external electronic device may receive an ACK packet for the packet P1 in a sixth sub-event in the third ISO_Interval 1513 and may receive an ACK packet for the packet P2 in a sixth sub-event in the fourth ISO_Interval 1514. A retransmission rate N for the second evaluation period 1530 may be 87.5% in percentage.

The third evaluation period 1540 may include a fifth ISO_Interval 1515 and a sixth ISO_Interval 1516. The external electronic device may perform a transmission and retransmission operations for a packet P3 and a packet P8, and perform a transmission for packets P4, P5, P6, and P7 in the third evaluation period 1540. The external electronic device may receive an ACK packet for the packet P3 in a fifth sub-event in the fifth ISO_Interval 1515 and may receive an ACK packet for the packet P4 in a sixth sub-event in the fifth ISO_Interval 1515, may receive an ACK packet for the packet P5 in a first sub-event in the sixth ISO_Interval 1516, may receive an ACK packet for the packet P6 in a second sub-event in the sixth ISO_Interval 1516, and may receive an ACK packet for the packet P7 in a third sub-event in the sixth ISO_Interval 1516. A retransmission rate N for the third evaluation period 1540 may be 43.75% in percentage.

For another example, in FIG. 15b, it will be assumed that the channel quality is identified based on the number of unacked packets (or "unacked packets count") during the evaluation period or the number of flushed packets (or "flushed packets count") during the evaluation period.

FIG. 15b is a diagram illustrating an example of an operation for identifying quality of a communication link in a wireless communication network according to another embodiment.

Referring to FIG. 15b, one ISO_Interval may include at least six sub-events, and sub-events included in each of an ISO_Interval 1561 to an ISO_Interval 1565 may be, in order, a first sub-event to a sixth sub-event. Transmissions of audio packets illustrated in FIG. 15b may be transmissions of audio packets in a communication link established between an audio source device and a first audio sink device. For example, the audio source device may be an external electronic device (e.g., an electronic device 101 in FIG. 1, or an external electronic device 201 in FIG. 2, FIG. 3, or FIG. 4), the first audio sink device may be a first electronic device (e.g., a first electronic device 202 in FIG. 2 or FIG. 4), and the communication link may be a first communication link established between the external electronic device and the first electronic device.

In an embodiment, the external electronic device may transmit audio packets during an evaluation period, and identify quality of the first communication link based on the number of unacked packets (or "unacked packets count") during the evaluation period or the number of flushed packets (or "flushed packets count") during the evaluation period. In an embodiment, the evaluation period may include a set number of ISO_Intervals. The number of ISO_Intervals included in the evaluation period may vary according to a situation of the wireless communication network, and the evaluation period may be implemented in a form that includes not only ISO Intervals but also other types of time intervals.

In the disclosure, channel quality may be represented by at least one of a moving average value, the number of unacked packets during the evaluation interval, the number of flushed packets during the evaluation interval, a noise level, a BLER, an FER, a BER, a PER, an RSSI, an SINR, an SNR, packet retransmission time, the number of transmitted packets per unit time, or a retransmission rate. For example, in FIG. 15b, it will be assumed that channel quality may be identified based on the number of unacked packets during the evaluation period or the number of flushed packets during the evaluation period.

FIG. 15b illustrates three evaluation periods (e.g., a first evaluation period 1570 and a second evaluation period 1580.

The first evaluation period 1570 may include a first ISO_Interval 1561 and a second ISO_Interval 1562. The external electronic device may perform a transmission and retransmission operations for a packet P0 in the first evaluation period 1560, but may not receive an ACK packet for the packet P0. Since no flush point exists in the first evaluation period 1570, the number of flushed packets during the first evaluation period 1570 may be 0 (zero). Alternatively, since ACK packets for the packet P0 are not received in the first evaluation period 1570, the number of unpacked packets during the first evaluation period 1570 may be 1.

The second evaluation period 1580 may include a third ISO_Interval 1563, a fourth ISO_Interval 1564, and a fifth ISO_Interval 1565. The external electronic device may perform a transmission and retransmission operations for packets P0 to P5 in the second evaluation period 1580. Since no corresponding ACK packet is received for each of the packets P0, P2, P3, P4, and P5 during the second evaluation period 1580, each of the packets P0, P2, P3, P4, and P5 may be an unacked packet. Alternatively, since the packet P1 is not transmitted and discarded during the second evaluation period 1580, the packet P1 may be a flushed packet.

As described in FIG. 15b, the external electronic device may identify the number of unacked packets during a specific evaluation period or the number of flushed packets during the specific evaluation period. The external electronic device may identify that quality of a corresponding communication link is lower than threshold quality if the number of unacked packets during the specific evaluation period is greater than a threshold-unacked packet number. Alternatively, the external electronic device may identify that the quality of the corresponding communication link is lower than the threshold quality if the number of flushed packets during the specific evaluation period is greater than a threshold-flushed packet number.

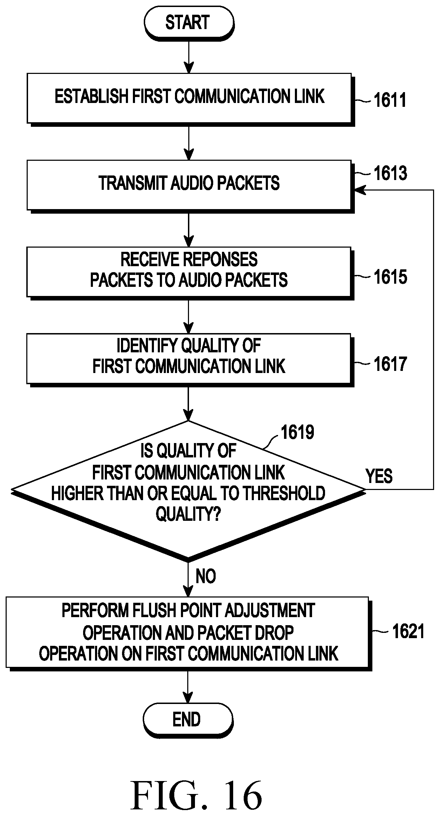

FIG. 16 is a flowchart illustrating still another example of an operating process of an external electronic device in a wireless communication network according to an embodiment.

Referring to FIG. 16, in operation 1611, a processor (e.g., a processor 120 in FIG. 1 or a processor 304 in FIG. 3) of an external electronic device (e.g., an electronic device 101 in FIG. 1, or an external electronic device 201 in FIG. 2, FIG. 3, or FIG. 4) may establish a communication link (e.g., a first communication link) with a first electronic device (e.g., a first electronic device 202 in FIG. 2 or FIG. 4) via a communication circuit (e.g., a communication module 190 in FIG. 1 or a communication circuit 302 in FIG. 3). Although FIG. 16 illustrates a case where the processor establishes the first communication link with the first electronic device as an example, the processor may also establish a communication link (e.g., a second communication link) with a second electronic device (e.g., a second electronic device 204 in FIG. 2 or FIG. 4), so operations 1613 to 1621 applied to the first communication link may also be applied to the second communication link. In an embodiment, operations 1613 to 1621 applied to the first communication link may also be applied to a third communication link established between the first electronic device and a second electronic device (e.g., a second electronic device 204 in FIG. 2 or FIG. 4).

In an embodiment, the first communication link may be a CIS connection, and the operation in which the processor establishes the first communication link may be implemented to be similar to or substantially the same as an operation in which an electronic device establishes a first communication link as described in operation 811 in FIG. 8, so a detailed description thereof will be omitted.

A processor, which establishes the first communication link with the first electronic device, may transmit audio packets to the first electronic device via the communication circuit in the established first communication link in operation 1613.

A processor which transmits the audio packets may receive response packets to the audio packets via the communication circuit in the first communication link in operation 1615. In an embodiment, a response packet may be an ACK packet or a NACK packet.

A processor which receives the response packets to the audio packets may identify quality of the first communication link based on the received response packets in operation 1617. In an embodiment, the processor may transmit audio packets during an evaluation period, and identify the quality of the first communication link based on response packets received for the audio packets transmitted during the evaluation period. In an embodiment, the evaluation period may include a set number of ISO_Intervals. The number of ISO_Intervals included in the evaluation period may vary according to a situation of a wireless communication network, and the evaluation period may be implemented in a form which includes not only ISO Intervals but also other types of time intervals. The evaluation period may be implemented to be similar to or substantially the same as an evaluation period described in FIGS. 15a and 15b, so a detailed description thereof will be omitted.

In an embodiment, the processor may identify the quality of the first communication link based on at least one of a moving average value, a noise level, a BLER, an FER, a BER, a PER, an RSSI, an SINR, an SNR, packet retransmission time, the number of transmitted packets per unit time, or a retransmission rate. In FIG. 13, for example, it is assumed that the moving average value is an EMA value, so the processor may identify the quality of the first communication link based on the EMA value in operation 1617. The operation in which the processor identifies the quality of the first communication link based on the received response packets may be implemented to be similar to or substantially the same as an operation in which the processor identifies the quality of the first communication link based on the received response packets as described in operation 817 in FIG. 8, so a detailed description thereof will be omitted.

The processor which identifies the quality of the first communication link may, in operation 1619, check whether the quality of the first communication link is higher than or equal to threshold quality. For example, the processor may identify that the quality of the first communication link is higher than or equal to the threshold quality if an EMA value of the first communication link is less than or equal to a threshold EMA value, and conversely, may identify that the quality of the first communication link is lower than the threshold quality if the EMA value of the first communication link is greater than the threshold EMA value. In an embodiment, the threshold EMA value may be determined based on a size of a payload included in an audio packet. A size of a payload including high-sound quality audio data (e.g., audio data whose sound quality is higher than or equal to threshold sound quality) may be larger than a size of a payload including low-sound quality audio data (e.g., audio data whose sound quality is lower than the threshold sound quality). For example, a threshold EMA value determined if the size of the payload included in the audio packet is greater than or equal to a threshold size may be different from a threshold EMA value determined if the size of the payload included in the audio packet is less than the threshold size. For example, the threshold EMA value determined if the size of the payload included in the audio packet is greater than or equal to the threshold size may be less than the threshold EMA value determined if the size of the payload included in the audio packet is less than the threshold size.

If the quality of the first communication link is higher than or equal to the threshold quality, the processor may return to operation 1613.

If the quality of the first communication link is lower than the threshold quality, the processor may perform a packet drop operation and a flush point adjustment operation on the first communication link in operation 1621. The packet drop operation may be implemented to be similar to or substantially the same as a packet drop operation described in operation 821 in FIG. 8, so a detailed description thereof will be omitted. The flush point adjustment operation may be implemented to be similar to or substantially the same as a flush point adjustment operation described in operation 1321 in FIG. 13, so a detailed description thereof will be omitted.

According to an embodiment, an operating method of an electronic device (e.g., an electronic device 101 in FIG. 1, or an external electronic device 201 in FIG. 2, FIG. 3, or FIG. 4) may include establishing a communication link with at least one external electronic device (e.g., a first electronic device 202 in FIG. 2 or FIG. 4, or a second electronic device 204 in FIG. 2 or FIG. 4).

According to an embodiment, the operating method may further include identifying quality of the communication link.

According to an embodiment, the operating method may further include based on the quality of the communication link being less than threshold quality, discarding at least one of packets to be transmitted during a set time period in the communication link.

According to an embodiment, the operating method may further include transmitting, to the at least one external electronic device (e.g., the first electronic device 202 in FIG. 2 or FIG. 4, or the second electronic device 204 in FIG. 2 or FIG. 4), a packet indicating that the at least one packet is discarded.

According to an embodiment, the operating method may further include adjusting flush points which are time points at which the packets to be transmitted during the set time period are set to be discarded, based on the quality of the communication link being less than the threshold quality.

According to an embodiment, discarding the at least one of the packets to be transmitted during the set time period in the communication link may include discarding the at least one packet at a time point preceding a flush point, which is a time point at which the at least one packet is set to be discarded, in a time domain.

According to an embodiment, identifying the quality of the communication link may include transmitting, to the at least one external electronic device (e.g., the first electronic device 202 in FIG. 2 or FIG. 4, or the second electronic device 204 in FIG. 2 or FIG. 4), packets during another set time period preceding the set time period in a time domain, receiving, from the at least one external electronic device (e.g., the first electronic device 202 in FIG. 2 or FIG. 4, or the second electronic device 204 in FIG. 2 or FIG. 4), during the other set time period, at least one response packet for the packets transmitted during the other set time period, and based on the at least one response packet, identifying the quality of the communication link.

According to an embodiment, adjusting the flush points which are the time points at which the packets to be transmitted during the set time period are set to be discarded may include adjusting the flush points for the packets to be transmitted during the set time period, based on a maximum number of sub-events included in each connected isochronous stream (CIS) event included in the set time period and a number of new data packets which may be transmitted within a time interval in which a CIS event occurs.

According to an embodiment, each CIS event may include an opportunity for the electronic device (e.g., the electronic device 101 in FIG. 1, or the external electronic device 201 in FIG. 2, FIG. 3, or FIG. 4) and the at least one external electronic device (e.g., the first electronic device 202 in FIG. 2 or FIG. 4, or the second electronic device 204 in FIG. 2 or FIG. 4) to exchange a packet.

According to an embodiment, each of the sub-events is used for the electronic device (e.g., the electronic device 101 in FIG. 1, or the external electronic device 201 in FIG. 2, FIG. 3, or FIG. 4) to transmit a packet and for the at least one external electronic device (e.g., the first electronic device 202 in FIG. 2 or FIG. 4, or the second electronic device 204 in FIG. 2 or FIG. 4) to respond to the electronic device (e.g., the electronic device 101 in FIG. 1, or the external electronic device 201 in FIG. 2, FIG. 3, or FIG. 4).

According to an embodiment, discarding the at least one of packets to be transmitted during the set time period in the communication link may include discarding at least one of the packets to be transmitted during the set time period based on a set discard ratio, and the set discard ratio may include a ratio of a number of acknowledgement (ACK) packets continuously received for a set number of packets among the packets to be transmitted during the set time period to a packet indicating that the at least one packet is discarded.

According to an embodiment, the operating method may further include transmitting, to the at least one external electronic device (e.g., the first electronic device 202 in FIG. 2 or FIG. 4, or the second electronic device 204 in FIG. 2 or FIG. 4), a packet including information associated with the adjusted flush points.

According to an embodiment, the packet indicating that the at least one packet is discarded may be an empty packet, a null packet, or a special packet.

According to an embodiment, an operating method of an electronic device (e.g., a first electronic device 202 in FIG. 2 or FIG. 4, or a second electronic device 204 in FIG. 2 or FIG. 4) may include establishing a communication link with an external electronic device (e.g., an electronic device 101 in FIG. 1, or an external electronic device 201 in FIG. 2, FIG. 3, or FIG. 4).

According to an embodiment, the operating method may further include receiving, from the external electronic device (e.g., the electronic device 101 in FIG. 1, or the external electronic device 201 in FIG. 2, FIG. 3, or FIG. 4), at least one packet during a set time period in the communication link.

According to an embodiment, the operating method may further include identifying whether a packet indicating that the packet is discarded is included in the received at least one packet.

According to an embodiment, the operating method may further include performing a recovery operation on a packet corresponding to the packet indicating that the packet is discarded, based on the packet indicating that the packet is discarded being included in the received at least one packet.

According to an embodiment, the at least one packet may be discarded at a time point preceding a flush point, which is a time point at which the at least one packet is set to be discarded, in a time domain.

According to an embodiment, the at least one packet may be included in the packets transmitted during the set time period.

According to an embodiment, the at least one packet may be discarded during the set time period based on a set discard ratio.

According to an embodiment, the set discard ratio may include a ratio of a number of acknowledgement (ACK) packets continuously received for a set number of packets among the packets transmitted by the external electronic device (e.g., the electronic device 101 in FIG. 1, or the external electronic device 201 in FIG. 2, FIG. 3, or FIG. 4) during the set time period to a packet indicating that the packet is discarded.

According to an embodiment, flush points for the packets transmitted during the set time period may be adjusted by the external electronic device (e.g., the electronic device 101 in FIG. 1, or the external electronic device 201 in FIG. 2, FIG. 3, or FIG. 4).

According to an embodiment, the flush points may be set time points at which the packets transmitted during the set time period are discarded.

According to an embodiment, the flush points may be adjusted based on a maximum number of sub-events included in each connected isochronous stream (CIS) event included in the set time period and a number of new data packets which may be transmitted within a time interval in which a CIS event occurs.

According to an embodiment, each CIS event may include an opportunity for the electronic device (e.g., the first electronic device 202 in FIG. 2 or FIG. 4, or the second electronic device 204 in FIG. 2 or FIG. 4) and the external electronic device (e.g., the electronic device 101 in FIG. 1, or the external electronic device 201 in FIG. 2, FIG. 3, or FIG. 4) to exchange a packet.

According to an embodiment, each of the sub-events may be used for the external electronic device (e.g., the electronic device 101 in FIG. 1, or the external electronic device 201 in FIG. 2, FIG. 3, or FIG. 4) to transmit a packet and for the electronic device (e.g., the first electronic device 202 in FIG. 2 or FIG. 4, or the second electronic device 204 in FIG. 2 or FIG. 4) to respond to the external electronic device (e.g., the electronic device 101 in FIG. 1, or the external electronic device 201 in FIG. 2, FIG. 3, or FIG. 4).

An electronic device and an operating method thereof according to an embodiment may stably provide an audio service having excellent quality even though quality of at least one communication link among communication links between electronic devices providing an audio service is less than threshold quality, thereby improving service quality.

An electronic device and an operating method thereof according to an embodiment may provide efficient transmission opportunities for an audio packet by performing a packet drop operation on a communication link having quality less than threshold quality if the quality of at least one communication link among communication links between electronic devices providing an audio service is less than the threshold quality, thereby improving service quality.

An electronic device and an operating method thereof according to an embodiment may provide efficient transmission opportunities for an audio packet by performing a flush point-adjustment operation on a communication link having quality less than threshold quality if the quality of at least one communication link among communication links between electronic devices providing an audio service is less than the threshold quality, thereby improving service quality.

## Claims

1. An electronic device (101; 201), comprising:
a communication circuit (190; 302); and
at least one processor (120; 304) operably connected to the communication circuit, wherein the at least one processor is configured to:
establish, via the communication circuit, a communication link with at least one external electronic device (202; 204),
identify quality of the communication link,
based on the quality of the communication link being less than threshold quality, discard at least one of packets to be transmitted during a set time period in the communication link, and
transmit, to the at least one external electronic device, via the communication circuit, a packet indicating that the at least one packet is discarded.

2. The electronic device of claim 1, wherein the at least one processor is further configured to:
based on the quality of the communication link being less than the threshold quality, adjust flush points which are time points at which the packets to be transmitted during the set time period are set to be discarded.

3. The electronic device of claim 1 or 2, wherein the at least one processor is configured to:
discard the at least one packet at a time point preceding a flush point, which is a time point at which the at least one packet is set to be discarded, in a time domain.

4. The electronic device of any one of claims 1 to 3, wherein the at least one processor is configured to:
transmit, to the at least one external electronic device, via the communication circuit, packets during another set time period preceding the set time period in a time domain,
receive, from the at least one external electronic device, via the communication circuit, during the other set time period, at least one response packet for the packets transmitted during the other set time period, and
based on the at least one response packet, identify the quality of the communication link.

5. The electronic device of claim 2, wherein the at least one processor is configured to:
based on a maximum number of sub-events included in each connected isochronous stream (CIS) event included in the set time period and a number of new data packets which may be transmitted within a time interval in which a CIS event occurs, adjust the flush points for the packets to be transmitted during the set time period,
wherein each CIS event includes an opportunity for the electronic device and the at least one external electronic device to exchange a packet, and
wherein each of the sub-events is used for the electronic device to transmit a packet and for the at least one external electronic device to respond to the electronic device.

6. The electronic device of any one of claims 1 to 4, wherein the at least one processor is configured to:
based on a set discard ratio, discard at least one of the packets to be transmitted during the set time period,
wherein the set discard ratio includes a ratio of a number of acknowledgement (ACK) packets continuously received for a set number of packets among the packets to be transmitted during the set time period to a packet indicating that the at least one packet is discarded.

7. The electronic device of claim 2, wherein the at least one processor is further configured to:
transmit, to the at least one external electronic device, via the communication circuit, a packet including information associated with the adjusted flush points.

8. An electronic device (202; 204), comprising:
a communication circuit (402); and
at least one processor (410) operably connected to the communication circuit, wherein the at least one processor is configured to:
establish, via the communication circuit, a communication link with an external electronic device (101; 201),
receive, from the external electronic device, via the communication circuit, at least one packet during a set time period in the communication link,
identify whether a packet indicating that the packet is discarded is included in the received at least one packet, and
based on the packet indicating that the packet is discarded being included in the received at least one packet, perform a recovery operation on a packet corresponding to the packet indicating that the packet is discarded.

9. The electronic device of claim 8, wherein the at least one packet is discarded at a time point preceding a flush point, which is a time point at which the at least one packet is set to be discarded, in a time domain.

10. The electronic device of claim 8 or 9,
wherein the at least one packet is included in the packets transmitted during the set time period,
wherein the at least one packet is discarded during the set time period based on a set discard ratio, and
wherein the set discard ratio includes a ratio of a number of acknowledgement (ACK) packets continuously received for a set number of packets among the packets transmitted by the external electronic device during the set time period to a packet indicating that the packet is discarded.

11. The electronic device of claim 10, wherein flush points for the packets transmitted during the set time period are adjusted by the external electronic device,
wherein the flush points are set time points at which the packets transmitted during the set time period are discarded,
wherein the flush points are adjusted based on a maximum number of sub-events included in each connected isochronous stream (CIS) event included in the set time period and a number of new data packets which may be transmitted within a time interval in which a CIS event occurs,
wherein each CIS event includes an opportunity for the electronic device and the external electronic device to exchange a packet, and
wherein each of the sub-events is used for the external electronic device to transmit a packet and for the electronic device to respond to the external electronic device.

12. An operating method of an electronic device (101; 201), the method comprising:
establishing a communication link with at least one external electronic device (202; 204);
identifying quality of the communication link;
based on the quality of the communication link being less than threshold quality, discarding at least one of packets to be transmitted during a set time period in the communication link; and
transmitting, to the at least one external electronic device, a packet indicating that the at least one packet is discarded.

13. The operating method of claim 12, further comprising:
based on the quality of the communication link being less than the threshold quality, adjusting flush points which are time points at which the packets to be transmitted during the set time period are set to be discarded.

14. The operating method of claim 12 or 13, wherein discarding the at least one of the packets to be transmitted during the set time period in the communication link comprises:
discarding the at least one packet at a time point preceding a flush point, which is a time point at which the at least one packet is set to be discarded, in a time domain.

15. The operating method of any one of claims 12 to 14, wherein identifying the quality of the communication link comprises:
transmitting, to the at least one external electronic device, packets during another set time period preceding the set time period in a time domain;
receiving, from the at least one external electronic device, during the other set time period, at least one response packet for the packets transmitted during the other set time period; and
based on the at least one response packet, identifying the quality of the communication link.
